(19) Europäisches Patentamt
European Patent Office
Office européen des brevets

(11) **EP 3 961 511 A1**

(12) **EUROPÄISCHE PATENTANMELDUNG**

(43) Veröffentlichungstag:
02.03.2022 Patentblatt 2022/09

(21) Anmeldenummer: 21181014.8

(22) Anmeldetag: 22.06.2021

(51) Internationale Patentklassifikation (IPC):
G06N 3/04 (2006.01)   G06N 3/08 (2006.01)
B60W 50/04 (2006.01)   B60W 60/00 (2020.01)

(52) Gemeinsame Patentklassifikation (CPC):
G06N 3/0454; B60W 50/04; B60W 50/045;
B60W 60/00186; G06N 3/088

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 31.08.2020 DE 102020122735

(71) Anmelder: Technische Universität Clausthal
38678 Clausthal-Zellerfeld (DE)

(72) Erfinder: Rausch, Andreas
38678 Clausthal-Zellerfeld (DE)

(74) Vertreter: Betten & Resch
Patent- und Rechtsanwälte PartGmbB
Maximiliansplatz 14
80333 München (DE)

(54) **ML-BASIERTE AUTOMATISCHE ERKENNUNG VON NEUEN UND RELEVANTEN DATENSÄTZEN**

(57) Systeme und Verfahren zur automatischen Erkennung von Daten, die relevant für das Training einer auf ML-basierten Komponente zur Datenauswertung sein können und die noch nicht bereits zum Training dieser ML-Komponente verwendet wurden und/oder noch nicht dauerhaft als verwendete Trainingsdaten in einer Datenbasis gespeichert wurden und somit für die kontinuierliche Vervollständigung von notwendigen und relevanten Daten für die ML-basierte Datenauswertungen verwendet werden sollen, basieren auf einem semantischen Autoencoder und einem Diskriminator zur Bestimmung, dass neue Daten, die zum Beispiel über Sensoren erfasst werden, eine relevante Ergänzung einer bestehenden Datenbasis sind, wobei die Datenbasis dem Training einer ML-basierten Komponente zur Datenauswertung dient, die zum Beispiel zur Steuerung autonomer Roboter, Fahrzeuge oder Drohnen benötigt werden.

FIG. 7

**Beschreibung**

**Gebiet der Erfindung**

Die Erfindung betrifft ML-basierte Verfahren und Systeme zur automatischen Erkennung von neuen und relevanten Daten zur kontinuierlichen Vervollständigung einer Datenbasis für ML-basierte Datenauswertungen, wie sie beispielsweise für autonome Systeme (Roboter, autonome Fahrzeuge, autonomen Drohnen, etc.) benötigt wird. Der Begriff KI steht für "künstliche Intelligenz" und bezieht sich hier auf Verfahren, die auf "maschinellem Lernen" (ML) beruhen. Im Folgenden ist daher auch von einen "ML-basierten System" und "ML-basierter Datenauswertung" die Rede.

**Hintergrund**

Vollständig autonome Fahrzeuge werden prinzipiell in zwei bis drei Jahren technisch realisierbar sein. Es ist allerdings absehbar, dass auch nach einem erfolgreichen "Proof-of-Concept" unter idealisierten und eingeschränkten Betriebsbedingungen noch weitere technologische Innovationen und Durchbrüche notwendig sein werden, um den sicheren Betrieb von autonomen Fahrzeugen in allen möglichen, d.h. auch nicht idealen, Betriebssituationen zu ermöglichen: Zukünftige vollautonome Systeme können die Kontrolle über das System, bei detektierten Problemen, nicht mehr ohne weiteres an den Menschen zurückgeben, wie es bei hoch automatisierten Funktionen momentan mit einer Vorlaufzeit möglich ist. Zum Beispiel können aktuelle Assistenzsystem in einem Fahrzeug zeitweise die Kontrolle über die Steuerung des Fahrzeugs übernehmen, jedoch wird bei Erkennen einer möglichen Gefahrensituation oder unbekannten Situation die Kontrolle mit zeitlichem Vorlauf und somit rechtzeitig zurück an den menschlichen Fahrer übergeben.

Autonome Fahrzeuge und autonome Systeme im Allgemeinen brauchen dazu eine gewisse Art von Intelligenz zur eigenständigen Handlungsplanung, um sich in unbekannten Umgebungen zurecht zu finden und eigenständige Aktionen zu planen. Die Durchführung von Aktionen verlangt das Steuern des Systems über Aktuatoren. Für beide Aspekte, Planung und Aktion, ist es notwendig, dass ein autonomes System ein präzises Modell seiner Umgebung hat.

Deshalb ist insbesondere bei zukünftigen autonomen Systemen eine zuverlässige Absicherung der Sensorik und Umweltwahrnehmung besonders wichtig, um die funktionale Sicherheit und die Sicherheit von Personen, im oder um das Fahrzeug, nicht zu gefährden.

In der Entwicklung von vollautonomen Systemen hat sich eine Architektur etabliert, welche Wahrnehmung, Handlungsplanung und Steuerung weitgehend trennt. Die Trennung der Aufgaben in Teilsysteme ermöglicht eine Entkopplung der Entwicklung und Absicherung der einzelnen Teilsysteme. Während es für Aktuatorik bereits etablierte Ansätze zur Absicherung über etablierte Normen und Prozesse gibt und die Absicherung von autonomer Handlungsplanung Gegenstand aktueller Forschung ist, gibt es für die Entwicklung und Absicherung der Wahrnehmung noch vergleichsweise wenige Ansätze.

Die Gründe dafür sind, dass erstens die in der Wahrnehmung notwendige Aufarbeitung und Integration, d.h. Fusion, der reinen Sensorsignale in ein konsistentes Weltbild nicht trivial ist und dass, zweitens, klassische Ansätze zur Absicherung, z.B. Redundanz, nicht ausreichen. Sobald zwei redundante Sensoren die Umwelt unterschiedlich beschreiben im Betrieb, benötigt das System eine Sensorverarbeitung, welche entscheidet, welcher Sensor korrekt arbeitet oder welche Sensordatenfusion die reale Umwelt am besten abbildet. Dieses Problem fällt in die Fehlerklasse der Byzantinischen Fehler, denn das System muss ohne Kenntnis der Umwelt urteilen, welcher der Sensoren fehlerhaft arbeitet und somit die Umwelt falsch beschreibt.

Unabhängig davon haben sich bei der Entwicklung von Umgebungswahrnehmungssystemen inzwischen ML-basierte Softwaresysteme gegenüber klassischen Ansätzen erfolgreich durchgesetzt. Deep Learning und andere Techniken des maschinellen Lernens sind hierbei die Basis. Eine vollständige Spezifikation der Funktionalität existiert dabei nicht. Stattdessen werden umfangreiche Daten für das Training des ML-basierten Systems benötigt, so werden zum Beispiel umfangreiche Bilddaten mit Fußgängern benötigt, um eine ML-basierte Fußgängererkennung zu trainieren.

Für die Sammlung dieser Daten wird heute in Entwicklung und Erprobung teure aber hoch präzise Referenzsensorsysteme mit denen Grundwahrheit-(*Ground Truth*) Daten aufgenommen werden eingesetzt. Dabei fällt eine immense große Anzahl von Daten an. Zum Beispiel kann man davon ausgehen, dass man bei einem (teil-/voll-)-autonomen Fahrzeug bis zu 50 Terabyte an Sensordaten pro Fahrzeug und Tag anfallen. Bekannten Schätzungen zu Folge benötigt man für die Absicherung von autonomen Fahrfunktionen, wie zum Beispiel den Autobahnassistenten, ca. 6,62 Milliarden Testkilometer. Es ist offensichtlich, dass die dabei anfallenden Daten nicht gespeichert werden können.

Theoretisch bräuchte man diese Daten allerdings, um ein ML-basiertes Umgebungswahrnehmungssystem so zu trainieren, so dass es entsprechend sicher ist. Tatsächlich sind in den statistisch benötigten 6,62 Milliarden Testkilometer aber sehr viele identische Fahrsituationen. Deshalb muss man heute manuell die relevanten Fahrsituationen herausfiltern, um einen von der Größe handhabbaren und andererseits relevanten Datenpool für das Training von ML-basierten Funktionen zu haben.

Eine ML-basierte Funktion bezeichnet hierin eine Komponente, die als Software und/oder Hardware-Komponente ausgebildet sein kann, die ein Eingabedatum, bzw. einen Vektor von Eingabedaten, auf eine Ausgabe, bzw. eine Menge von Ausgaben abbildet, wobei die Funktion nicht in klassischer Form algorithmisch oder analytisch durch Regeln bestimmt wird, sondern durch die Ausführung eines Maschinenmodells der KI, wie zum Beispiel eines künstlichen neuronalen Netzes, das durch maschinelles Lernen (ML) auf der Basis von Trainingsdaten auf die gewünschte Funktion programmiert wurde.

Dependability Cage Ansatz

Der Zuverlässigkeitskäfig (*Dependability Cage*)-Ansatz wird verwendet, um die Herausforderungen der Entwicklung zuverlässiger autonomer Systeme zu bewältigen. Zuverlässigkeitskäfige werden von Ingenieuren aus bestehenden Entwicklungsartefakten abgeleitet. Diese Zuverlässigkeitskäfige werden dann sowohl während der Entwicklungszeit als auch während des Betriebs verwendet, um die Korrektheit des Systems im Hinblick auf seine Zuverlässigkeitsanforderungen zu überprüfen. Die autonome Funktion erfüllt ihre Sicherheitsanforderungen zur Laufzeit und arbeitet innerhalb sicherer Grenzen. Mit diesem Ansatz erhalten die Anwender eine transparente Sicht auf das Vertrauensniveau des autonomen Systems in Bezug auf die Zuverlässigkeitsanforderungen.
Der Ansatz des Zuverlässigkeitskäfigs besteht aus vier Hauptteilen: (1) Entwicklung des Zuverlässigkeitskäfigs und Monitortraining, (2) Laufzeitüberwachung und Systemstabilisierung, (3) überwachte Datenanalyse und zielgerichtete Systemweiterentwicklung und (4) eine Plattformarchitektur für die nahtlose Entwicklung und den Betrieb des autonomen Systems.

Neuheitserkennung

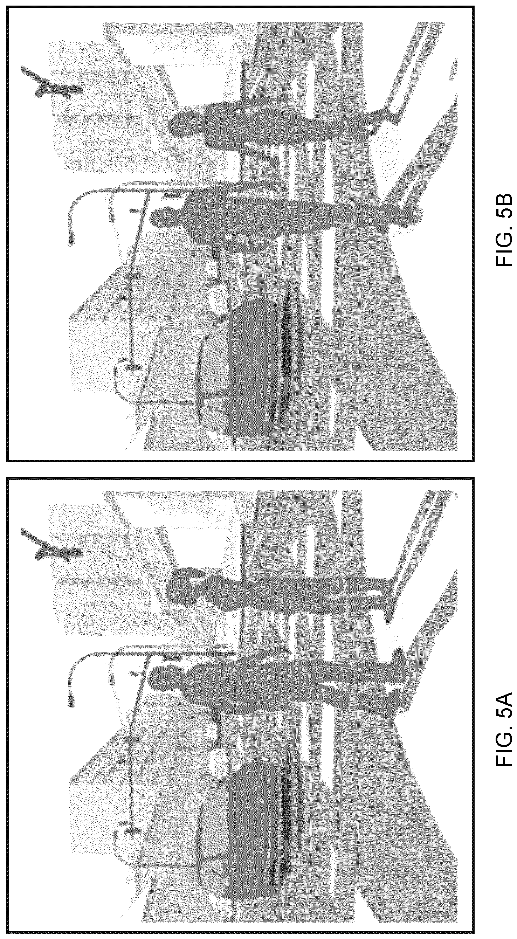

Eine wesentliche Herausforderung bei der Implementierung eines Zuverlässigkeitskäfigs ist es, die Neuheit von erfassten Sensordaten schnell und zuverlässig während des Betriebs eines zu sichernden autonomen Systems zu bestimmen.
Die Bereitstellung eines Maßes für die semantische Ähnlichkeit von Eingabedaten, die als Argument für die Zuverlässigkeit der Ausgabeinformationen dienen, ist eine Herausforderung (*semantic_similar*($x, y$)). Ein Ansatz zur Realisierung eines solchen semantischen Ähnlichkeitsmaßes ist die Neuheitserkennung zur automatischen Identifikation neuer relevanter Testdaten, die sich von den vorhandenen Trainingsdaten unterscheiden. Vielversprechende Ansätze zur Neuheitserkennung nutzen ML-basierte Technologien, wie z. B. einen Autoencoder oder Erzeugendes-Gegnerisches-Netzwerk (*Generative Adversarial Network, GAN).*
Die Neuheitserkennung als Klassifizierungsaufgabe, mit der festgestellt werden soll, ob sich neue Beobachtungsdaten während des Trainings und der Tests von den verfügbaren Daten unterscheiden, wird derzeit in verschiedenen Bereichen, wie z.B. Bildverarbeitung (Computer Vision), in großem Umfang angewandt. Sie wird typischerweise dann eingesetzt, wenn die "abnormalen" Daten, zum Beispiel Bilddaten von Situation die selten auftauchen und möglicherweise eine besondere Reaktion eines autonomen Fahrzeugs erforderlich machen, nicht ausreichen, um explizite Modelle für nicht-normale Klassen, zu konstruieren. Mit anderen Worten, es liegen zu wenige "abnormale" Daten vor, bzw. vorliegende "abnormalen" Datensätze sind zu divers, als dass diese mithilfe herkömmlicher Modelle der der Bilderkennung zuverlässig erkennen könnten.
Existierende Verfahren zur Neuheitserkennung, zum Beispiel "Naive" Autoencoder-basierte Neuheitserkennungsansätze, können sinnvoll auf eine Familie von Eingabebildern mit einer gemeinsamen Struktur verallgemeinern und Eingabebilder mit unterschiedlichen Strukturen als neuartige Daten klassifizieren. Ein bekannter Ansatz zu Neuheitserkennung basierend auf einem "Naive" Autoencoder wird von C. Richter, N. Roy in "Safe Visual Navigation via Deep Learning and Novelty Detection," Robotics: Science and Systems Foundation, Massachusetts Institute of Technology, 2017 vorgestellt.
Ein signifikanter struktureller Unterschied in den Eingabedaten korreliert jedoch nicht zwangsläufig mit einer anderen Klasse von Ausgabeinformationen. Um die Zuverlässigkeit eines ML-basierten Systems zu gewährleisten, muss sichergestellt werden, dass für jede relevante Ausgabeinformation ausreichend umfangreiche Trainings-Eingabedaten vorhanden sind, unabhängig davon, wie groß der strukturelle Unterschied in den Eingabedaten ist. Wie in FIG. 5A und 5B dargestellt, haben zum Beispiel völlig unterschiedliche Verkehrssituationen (Ausgabeinformationen) häufig ähnliche Bilder (Eingabedaten). In FIG. 5A kann ein autonomes Fahrzeug den Zebrastreifen passieren, ohne die Fußgänger zu gefährden. In FIG. 5B muss ein autonomes Fahrzeugt anhalten und die Fußgänger den Zebrastreifen passieren lassen.
ML-basierten Systemen mangelt es an Robustheit, z. B. wenn die Trainingsdaten selten oder gar nicht kritische Situationen abdeckten. Die herausfordernde Aufgabe ist, wenn, zum Beispiel, ein neues Bild ein Datenbeispiel für eine unbekannte Fahrsituation darstellt ("unbekannt" gemessen an relevanten neue Ausgangsinformationen, d.h. in 5B muss das Fahrzeug anhalten, in 5A kann es weiterfahren, daher ist Bild 5B vom Bild 5A anhand der Ausgangsinformation zur Steuerung des Fahrzeugs, d.h. zum Beispiel der Ausgabe des Wahrnehmungsmoduls 431, zu unterscheiden), muss es als neuartig identifiziert werden, unabhängig davon, ob es sehr starke strukturelle Ähnlichkeit zu einem bestehenden, d.h. bekannten, Bild hat. Obgleich diese und folgende Anmerkungen zur Veranschaulichung Bezug auf Bilddaten nehmen, sind die hierin beschriebenen Verfahren auch auf andere Sensordaten, wie zum Entfernungsdaten, die durch ein Radar erfasst werden, oder Akustikdaten, anwendbar.

Um dieses Problem zu lösen, wird vorliegend ein neuer Ansatz zur Neuheitserkennung beschrieben, die sogenannte semantische Neuheitserkennung, die eine neue Autoencoder-Architektur verwendet, die (a) den Autoencoder dazu veranlasst, neuartige Eingabedaten mit einem eindeutigen, ausreichenden Rekonstruktionsfehler zu rekonstruieren und (b) die Differenz zwischen der ursprünglichen und der rekonstruierten Eingabe basierend auf dem resultierenden Fehler der entsprechenden Ausgabeinformationen berechnet. Wir zeigen, dass ein solch ausgeklügelter Autoencoderbasierter Ansatz zur semantischen Neuheitserkennung deutlich leistungsfähiger ist als bestehende "naive" Autoencoderbasierte Verfahren zur Neuheitserkennung.

**Zusammenfassung**

Systeme und Verfahren zur automatischen Erkennung von Daten, die relevant für das Training einer auf MLbasierten Komponente zur Datenauswertung sein können und die noch nicht bereits zum Training dieser ML-Komponente verwendet wurden und/oder noch nicht dauerhaft als verwendete Trainingsdaten in einer Datenbasis gespeichert wurden und somit für die kontinuierliche Vervollständigung von notwendigen und relevanten Daten für die ML-basierte Datenauswertungen verwendet werden sollen, basieren auf einem semantischen Autoencoder und einem Diskriminator zur Bestimmung, dass neue Daten, die zum Beispiel über Sensoren erfasst werden, eine relevante Ergänzung einer bestehenden Datenbasis sind, wobei die Datenbasis dem Training einer ML-basierten Komponente zur Datenauswertung dient, die zum Beispiel zur Steuerung autonomer Roboter, Fahrzeuge oder Drohnen benötigt werden.

Eine Ausführungsform betrifft ein computerimplementiertes Verfahren für ML-basierte Datenauswertung 110, umfassend folgende Schritte: Empfangen 810 eines Stroms von Sensordaten 160; Codieren 820 der Sensordaten über einen Encoder 120; Bestimmen 830, durch einen Diskriminator 130 und basierend auf den codierten Sensordaten, ob die Sensordaten relevante Ergänzungen 150 einer Menge von Trainingsdaten 140 sind.

In einer Ausführungsform wird das Verfahren zur kontinuierlichen Vervollständigung der Menge von Trainingsdaten 140 verwendet wird und umfasst ferner den Schritt: Basierend auf der Bestimmung, dass die Sensordaten eine relevante Ergänzung sind, Hinzufügen 840 der Sensordaten zu der Menge von Trainingsdaten 140.

In einer Ausführungsform wird das Verfahren zur Überwachung und Eigendiagnose einer ML-basierten Steuerung eines autonomen Systems verwendet wird, ferner umfassend den Schritt: Basierend auf der Bestimmung, durch den Diskriminator 130, dass die Sensordaten eine relevante Ergänzung sind, Ausgeben 850, durch den Diskriminator 130, eines Steuersignals zur Überführung des autonomen Systems in einen Fail-Safe-Modus.

In einer weiteren Ausführungsform ist der der Encoder 120 ein semantischer Autoencoder 423 oder ein Generative Adversarial Network und der Encoder wird basierend auf der Menge von Trainingsdaten 140 trainiert.

In einer weiteren Ausführungsform basiert der semantische Autoencoder 120, 423 auf einem neuronalen Netz 600, dessen Topologie einer oder mehrerer von folgenden Regeln genügt:

a)

$$ n \geq f \geq \left\lceil \log_2 n \right\rceil ; $$

wobei n eine Anzahl vorbestimmter semantischer Klassen einer Umgebungswahrnehmung der ML-basierten Steuerung des autonomen Systems (180) ist und
wobei $f$ eine Anzahl von Neuronen in einer mittleren Schicht 620 des Netzes ist;

b)

$$ (2 * \left\lceil \log_2 n \right\rceil) + 1 + 2 \geq l \geq (2 * \left\lceil \log_2 n \right\rceil) - 1 + 2 ; $$

wobei $l$ eine Anzahl von Schichten des neuronalen Netzes ist einschließlich einer Eingabe- 610 und einer Ausgabeschicht 630; und

c)

$$h(k) :=$$

$$\begin{cases} io \text{ falls } k = \pm \left\lfloor \frac{l}{2} \right\rfloor \\ h(k) \text{ gemäß Regel a) falls } k = 0 \\ 2^{\lceil \log_2 io \rceil - \sum_{i=0}^{\lfloor l/2 \rfloor - |k| - 1} i} \geq h(k) \geq 2^{\lceil \log_2 io \rceil - \sum_{i=0}^{\lfloor l/2 \rfloor - |k| - 1} 2^i} \end{cases}$$

sonst, wobei $k$ eine Ordnungsnummer einer Schicht des neuronalen Netzes ist,
wobei $h(k)$ eine resultierende Anzahl von Neuronen in der Schicht $k$ ist, und
wobei $io$ eine Anzahl von Neuronen in der Eingabe- 610 oder Ausgabeschicht 630 ist.

Eine Ausführungsform betrifft ein computerimplementiertes Verfahren 800 für ML-basierte Datenauswertung umfassend folgende Schritte: Empfangen 810 eines Stroms von Sensordaten 160, 711; Codieren 820 der Sensordaten über einen semantischen Autoencoder 120, 723; Verarbeiten sowohl der originalen Sensordaten 742, wie auch der durch semantischen Autoencoder 120, 723 codierten Sensordaten 743, durch eine ML-basierte Komponente 110, 731; Bestimmen, durch einen Diskriminator 130, 721 auf Basis der verarbeiteten originalen Sensordaten 741 und der verarbeiteten durch den semantischen Autoencoder 120, 723 codierten Sensordaten 740, ob die originalen Sensordaten 711 relevante Ergänzungen 150, 727 einer Menge von Trainingsdaten 140, 726 sind; basierend auf der Bestimmung durch den Diskriminator 130, 721, dass die originalen Sensordaten 742 eine relevante Ergänzung 150, 727 der Menge von Trainingsdaten 140, 726 sind, Hinzufügen 840 der originalen Sensordaten 742 zu der Menge von Trainingsdaten 140.

Eine weitere Ausführungsform betrifft eine Vorrichtung 100 zur ML-basierten Steuerung eines autonomen Systems 180 umfassend: einen Speicher 140, der zur Speicherung von Trainingsdaten ausgelegt ist; einer ML-Komponente 110, die dazu ausgelegt ist, Sensordaten 160 zu empfangen und Signale 170 zur Steuerung eines autonomen Systems 180 auszugeben; eine Überwachungskomponente 190 zur Überwachung der ML-Komponente 110, umfassend einen Encoder 120 und einen Diskriminator 130, wobei die Überwachungskomponente dazu ausgelegt ist, eines der zuvor beschriebenen computerimplementierten Verfahren durchzuführen.

Eine weiterer Ausführungsform betrifft eine Vorrichtung 190 zur Überwachung einer ML-basierten Steuerung 110 eines autonomen Systems 180 gemäß einem der zuvor beschriebenen computerimplementierten Verfahren umfassend: einen Encoder 120; und einen Diskriminator 130.

Das hierin vorgeschlagene Konzept des Quantitativen Monitorings erkennt neuartige Situationen beim Systembetrieb, was folgende technische Vorteile hat: Die Qualität der Trainingsdaten für die Entwicklung wird kontinuierlich verbessert; es wird ein Sicherheitsargument für die Zulassung eines autonomen Systems bereitgestellt, d.h. die Sicherheit wird erhöht; ein On-Board-Diagnosesystem für den Systembetrieb kann etabliert werden. Der Quantitative Monitor bietet Ferner den Vorteil, dass Menge an Daten, die für zukünftige Trainingsläufe der überwachten ML Komponenten in Betracht zu ziehen sind, gegenüber einer vollumfänglichen Aufzeichnung und Speicherung aller Sensorrohdaten stark reduziert bzw. gefiltert werden kann, da nur diejenigen Daten aufgezeichnet und für zukünftiges Training verwendet werden, die als "neu" gegenüber den bisherigen Trainingsdaten ermittelt werden.

In einer weiteren Ausführungsform der hier offenbarten Neuheitserkennung werden nicht nur die Eingabedaten, sondern auch die Ausgabedaten des betrachteten Systems zur Ableitung eines Autoencoders für die Neuheitserkennung verwendet. Ein solcher verbesserter, sogenannter voll-semantischer, auf einem Autoencoder basierender, Ansatz zur Neuheitserkennung ist wesentlich leistungsfähiger als bestehende Ansätze.

Eine Ausführungsform betrifft ein computerlesbares Speichermedium, umfassend Befehle, die bei der Ausführung durch einen Computer diesen veranlassen, die Schritte eines der vorgenannten Verfahren durchzuführen.

**Liste der Figuren**

FIG. 1 zeigt eine Architektur zur ML-basierten automatischen Erkennung neuer und relevanter Datenströme.

FIG. 2 zeigt das Dependable-Cage Architekturmodell.

FIG. 3 zeigt eine Architektur und einen Prozess zum kontinuierlichen Monitoring basierend auf dem Dependable-Cage-Modell.

FIG. 4 zeigt Details eines Quantitativen Monitors basierend auf einem Autoencoder und einem Diskriminator.

FIG. 5A und 5B zeigen strukturell ähnliche Bilder von Fußgängern in unterschiedlichen Situationen.

FIG. 6 zeigt eine schematische Darstellung eines Autoencoder Netzes und von Regeln, nach denen eine semantische Topologie eines Autoencoders zur semantischen Neuheitsbestimmung auszulegen ist.

FIG. 7 zeigt Details eines Quantitativen Monitors mit basierend auf einem semantischen Autoencoder mit ML-basierter voll-semantischer Neuheitsbestimmung gemäß einer Ausführungsform.

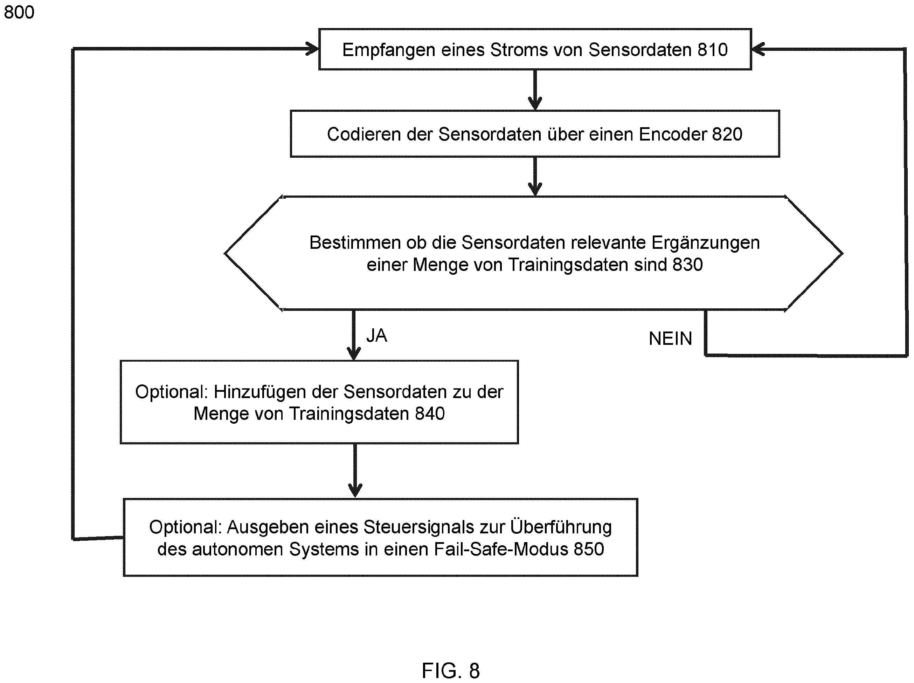

FIG. 8 zeigt ein Verfahren zur Überwachung einer ML-basierten Komponente.

**Detaillierte Beschreibung**

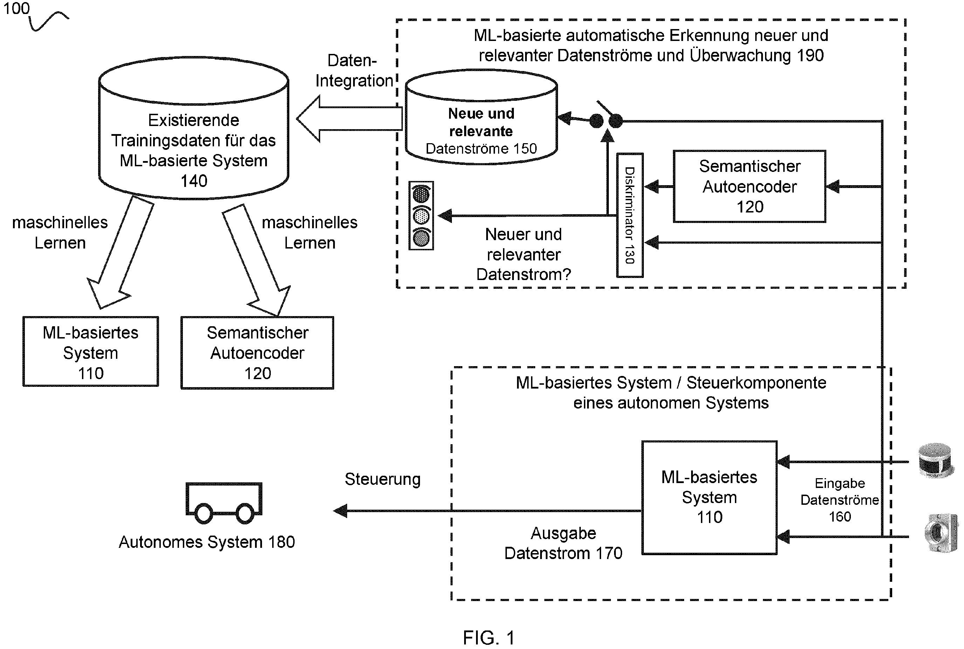

FIG. 1 zeigt eine Architektur zur ML-basierten automatischen Erkennung neuer und relevanter Datenströme. Eingabedatenströme, zum Beispiel Sensordaten, werden, zum Beispiel kontinuierlich, von einer ML-basierten Komponente 110 in einen entsprechenden Ausgabe-Datenstrom, der zum Beispiel Steuersignale für ein autonomes Systems überführt. In FIG. 1 ist dieser Aspekt als ML-basiertes System dargestellt. Dieses System ist durch einen Zuverlässigkeitskäfig abzusichern. Ein Baustein eines Zuverlässigkeitskäfigs ist in FIG. 1 als automatische Erkennung neuer und relevanter Datenströme dargestellt. Erfasste Sensordaten werden an einen semantischen Autoencoder 120 herangeführt, der in Kombination mit eine nachgelagerten Diskriminator 130 bestimmt, ob die aktuell aus dem Sensordatenstrom vorliegenden Daten neue und relevante Ergänzungen 150 einer Trainingsdatenbasis 140 sind. Die Komponente 120 ist, wie im Folgenden beschrieben, selbst als ML-basierte Funktionen implementiert. Neue und relevante Ergänzungen können in die existierende Datenbasis 140 integriert werden. Auf der Grundlage dieser ergänzten Datenbasis wiederum werden durch maschinelles Lernen, die ML-Komponenten 110 und 120 trainiert. Anhand eines Iterativen Prozesses von Training und Erkennung von neuen relevanten Ergänzungen der Trainingsdatenbasis, kann die Funktionsweise des ML-basierten Systems im Laufe der zuverlässiger und robuster werden in Bezug auf unterschiedliche Umweltsituationen werden, die in entsprechenden Strömen von Eingabedaten (Sensordaten) widergespiegelt werden.

Ausgehend von einem existierenden Datenpool, wurde oder soll eine ML-basierte Funktion trainiert werden. Allerdings ist dieser Datenpool noch nicht umfassend genug, um die Funktion "perfekt" zu trainieren, d.h. die Funktion derart zu trainieren, dass sie unter jeder möglichen Eingabe die gewünschte Ausgabe liefert. Um die ML-basierte Funktion 110 zu verbessern, sollen aus der realen Welt weitere Daten in die Satz von Trainingsdaten 140 aufgenommen werden. Eine Aufgabe der hierin beschriebenen Technologie ist es, automatisch zu entscheiden, welche der neu aufgenommenen Daten eine substantielle Erweiterung des bestehenden Datenpools sind, substantiell im Hinblick darauf, dass der ergänzte Datenpool als Trainingsbasis eine bessere zu trainierende ML-basierte Funktion ermöglicht. Insofern wird eine kontinuierliche Vervollständigung von Trainingsdaten ermöglicht.

Eine weitere Anwendung und Aufgabe besteht darin, ein Verfahren für einen unabhängigen Safety-Monitor, zum Beispiel im Serienbetrieb eines autonomen Systems, d.h. eine On-Board Life-Überwachung, zu realisieren. Ein autonomes System kann zum Beispiel ein autonomer Roboter, ein Fahrzeug oder eine Drohne sein. Bei Erkennen neuer relevanter Sensordaten, werden diese nicht nur gespeichert, um zum Beispiel der Basis von Trainingsdaten als Ergänzung zugeführt zu werden, sondern auch einem Monitor zugeführt, der das autonome System veranlassen kann, in einen Safe-Fail Modus überzugehen, d.h. in einen sicheren Zustand im Sinne von ISO 26262 und SOTIF Standard. Insofern wird im Folgenden eine Monitoring-Architektur für die Eigendiagnose beschrieben.

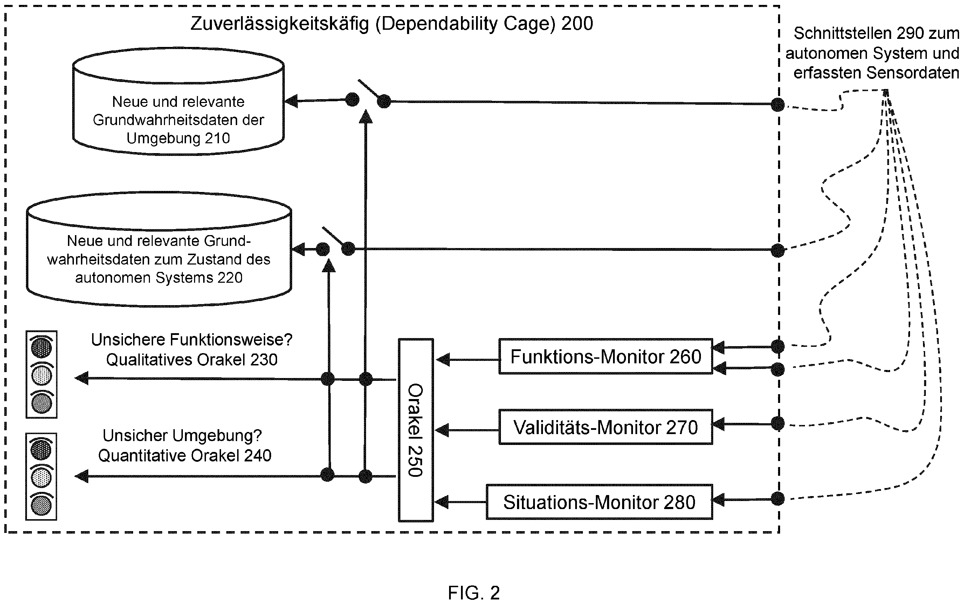

FIG. 2 zeigt ein Architekturmodell für einen Zuverlässigkeitskäfig. Der Zuverlässigkeitskäfig sichert ein System, zum Beispiel ein autonomes System, und dessen ML-basierte Steuerfunktionen, ab. Dieses überwachte System ist nicht in FIG. 2 dargestellt. Der Zuverlässigkeitskäfig erhält Daten über den Zustand der Umgebung und den Zustand des autonomen Systems, zum Beispiel den Betriebszustand, Position, Geschwindigkeit etc., über Schnittstellen 290. Diese Schnittstellen 290 sind mit Sensoren bzw. dem zu sichernden autonomen System selbst verbunden. Datenspeicher 210 dient zur Speicherung solcher Sensordaten, die durch den Zuverlässigkeitskäfig als neue und relevante Grundwahrheitsdaten der Umgebung erkannt werden. Datenspeicher 220 dient zur Speicherung solcher Sensordaten, die durch den Zuverlässigkeitskäfig als neue und relevante Grundwahrheitsdaten des autonomen Systems erkannt werden. Diese Daten enthalten zum Beispiel Informationen zum Betriebszustand des autonomen Systems, zum Beispiel die aktuelle Position und Geschwindigkeit des Systems, sowie Motordrehzahl, Beladung, Ladezustand der Batterie, etc. Neu bedeutet in diesem Zusammenhang, dass diese Daten bisher nicht bzw. mit hoher Wahrscheinlichkeit nicht, zum Training der zu überwachenden ML-basierten Funktion verwendet wurden. Relevant bedeutet, dass die Aufnahme dieser Daten in die Trainingsdaten für die ML-basierten Funktion, das Verhalten der ML-basierte Funktion des überwachten Systems durch erneutes maschinelles Lernen ändern, bzw. mit hoher Wahrscheinlichkeit ändern würden. Über das Vorliegen von Neuheit und Relevanz von Daten, die über die Schnittstelle 290 aufgenommen werden, entscheidet die Kombination von Monitoren 260, 270, 280 und das Orakel 250, die jeweils selbst als ML-basierte Funktionen implementiert sein können. Die jeweiligen Monitore bestimmen Neuheit und Relevanz für unterschiedliche Arten von Eingangsdaten, z.B. von Umgebungsdaten oder von Daten zum Betriebszustand des autonomen Systems. Das Orakel 250, welches ebenfalls als ML-basierte Funktion implementiert sein kann, entscheidet, ob die Daten in die jeweiligen Speicher 210 und 220 aufgenommen werden sollen und ob eine unsichere Betriebsart vorliegt. Das Quantitative Orakel 240 bestimmt, ob das autonome System einer Situation und Umgebung ausgesetzt ist, die zuvor bekannt ist und getestet wurde. Das Qualitative Orakel 230 bestimmt, ob das autonome System in eine. sicheren Betriebszustand ist. Die im Bild gezeigten Ampeln symbolisieren, dass diese Informationen als boolesche Werte oder auch als Wahrscheinlichkeitswert ausgeben werden, der basierend auf einem Schwellwert, festlegt, ob zum Beispiel für das autonome System eine Fehlerfall-Steuerung (nicht in der Figur abgebildet) ausgelöst werden soll.

Der Wahrnehmungskomponente eines autonomen Systems nutzt heutzutage in hohem Maße ML-Techniken. Die Korrektheit eines solchen Systems hängt von der Existenz ausreichend umfassender repräsentativer und relevanter Trainingsdaten ab. Beim Zuverlässigkeitskäfig-Ansatz besteht die Aufgabe des Quantitativen Monitors darin, zu überprüfen, ob sich das System gegenwärtig in einer bereits aus Training und Test bekannten Situation befindet.

Ein wesentliches Prinzip einer Architektur zur Überwachung einer ML-Komponente, zum Beispiel eine Architektur gemäß dem im Folgenden vorgestellten Zuverlässigkeitskäfig-Ansatz, ist es, mittels Neuheitserkennung zu bestimmen, ob die ML-Komponente einer Eingabe ausgesetzt ist, die in genügendem Maße Eingaben entspricht, die ursprünglich zum Training der ML-Komponente verwendet wurde. In diesem Fall, kann davon ausgegangen werden, dass das Verhalten der ML Komponente "sicher" ist. Die hierin beschriebenen Verfahren betreffen Varianten der Neuheitserkennung.

Im Kontext einer Architektur zur Überwachung einer ML-Komponente, liegen Herausforderungen und Problemstellungen der Neuheitserkennung in folgendem Spannungsfeld: In einer extremen Variante von Neuheitserkennung, werden alle Daten, die nicht identisch mit Trainingsdaten übereinstimmen, als neu klassifiziert. Dies ist für die Überwachung einer ML-Komponente nicht nützlich und wünschenswert, da der Vorteil einer zu überwachenden ML Komponente ja gerade darin liegt, auch für Eingabedaten, die von Trainingsdaten abweichen, sicher und korrekt zu funktionieren. Andererseits ist eine Neuheitserkennung, die auch den Trainingsdaten entfernt ähnliche Daten als nicht neu erkennt nicht wirksam, da solche Eingabedaten zu einem unvorhersehbaren Verhalten der ML-Komponente führen könnten. Es ist ferner eine Herausforderung der Neuheitserkennung, dass auch Eingabedaten, die den Trainingsdaten strukturell sehr ähnlich sein können, vollkommen unterschiedliche Funktionsweise der zu überwachenden ML-Komponente hervorrufen sollen (siehe Beispiele in FIG. 5A und 5B). Eine Neuheitserkennung zum Zwecke der Überwachung einer ML-Komponente muss folglich in der Lage sein, Daten, die sich auch nur geringfügig von bestehenden Trainingsdaten unterscheiden, als unterschiedlich und ggf. neu zu erkennen.

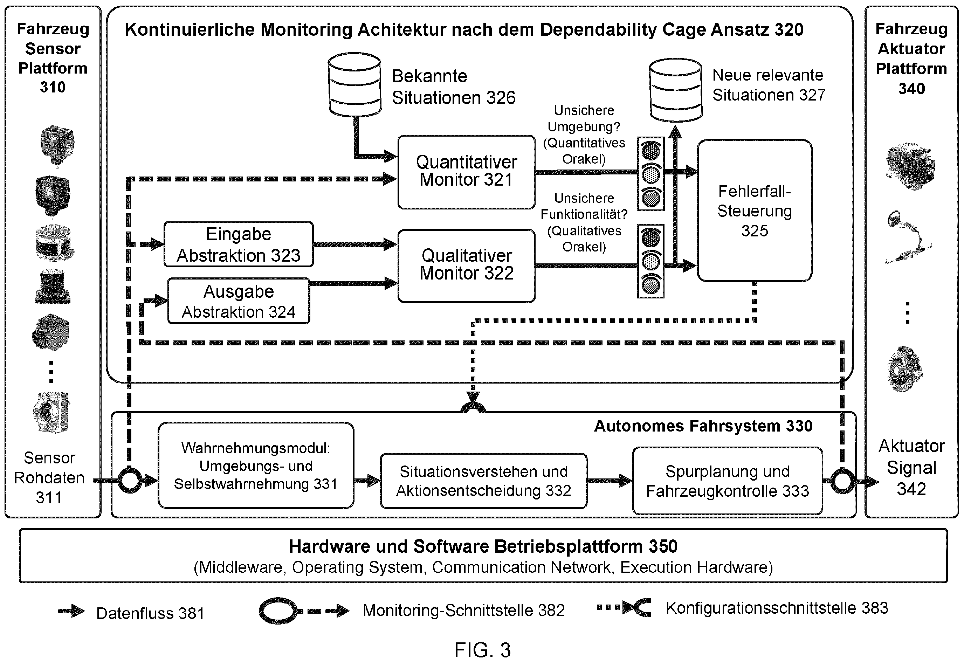

Das Kernkonzept des Zuverlässigkeitskäfig-Ansatzes ist eine kontinuierliche Überwachungsarchitektur, wie in FIG. 3 dargestellt. FIG. 3 zeigt diese Architektur am Beispiel eines autonomen Fahrsystems 330, ohne jedoch auf diese spezielle Form eines autonomen Systems beschränkt zu sein. Der Einfachheit halber wird das autonome System nach dem Eingabe-Verarbeitung-Ausgabe-Muster im Kontext einer High-Level-Architektur für ML-basierte automatisierte Neuheitserkennung dargestellt.

Eingaben werden in FIG. 3 durch eine oder mehrere Sensoren einer Sensorplattform 310 als Rohdaten 311 erfasst.

Die Verarbeitung der Sensor Rohdaten 311 zum Zwecke der Steuerung mittels Aktuatoren einer Fahrzeug-Aktuator-Plattform 340 über Aktuator Signale 342 findet durch das autonome Fahrsystem 330 statt. Im Beispiel sind drei Verarbeitungsstufen angezeigt, es können im Allgemeinen jedoch mindestens ein, oder auch mehr als drei Verarbeitungsschritte vorliegen. Einzelne Verarbeitungsstufen basieren auf ML-basierter Datenauswertung, d.h. eine Verarbeitungsstufe kann eine komplexe Funktion enthalten, die mittels Verfahren von maschinellem Lernen implementiert sind. Die Funktionen werden, wie nachfolgend beschrieben, durch eine Monitoring Architektur nach dem Dependability Cage Ansatz überwacht.

Diese Verarbeitung bzw. Transformation von Sensor-Rohdaten 311 in Aktuator-Signale 342 findet in mehreren Stufen statt. In der ersten Verarbeitungsstufe 331, die zum Beispiel eine Wahrnehmungskomponente des autonomen Systems sein kann, findet eine Wahrnehmung der Umgebung und des Fahrsystems selbst statt. In dieser Stufe der Verarbeitung werden zum Beispiel Bilderkennung ausgeführt.

In einer weiteren Stufe der Verarbeitung 332 finden Verarbeitungsschritte zum Verstehen und zur semantischen Erfassung der Umgebung bzw. erfassten Situation, Umgebung und Umwelt statt und es werden hierauf basierend Entscheidungen getroffen, die als weitere Eingabe für eine dritte Verarbeitungsstufe 333 dienen.

Die dritte Verarbeitungsstufe 333 berechnet, zum Beispiel, schließlich Steuersignale 342 für Aktuatoren und gibt diese aus. Im konkreten Beispiel in FIG. 3 dient die Verarbeitung im dritten Schritt der Spurplanung und der Fahrzeugkontrolle. 333.

Die einzelnen Stufen werden wie abgebildet jeweils überwacht. Konkret werden die einzelnen Verarbeitungsschritte, bzw. deren Ergebnisse durch eine kontinuierliche Monitoring Architektur nach dem Dependability Cage Ansatz 320 überwacht. Die Überwachung besteht nicht nur lediglich in einem Beobachten der Verarbeitungsschritte bzw. deren Eingabe und Ausgabe und die entsprechende Monitoring-Schnittstellen 382, sondern auch in konkreter Einflussnahme, durch eine Fehlerfall-Steuerung 325 über eine entsprechende Konfigurationsschnittstelle 383.

Die Ausgabe der Verarbeitung sind schließlich Steuersignale 342 für Aktuatoren in einer Aktuator Plattform 340, die im konkreten Beispiel des autonomen Fahrsystems dieses physisch steuern.

Um die Korrektheit des Verhaltens eines autonomen Systems zu beurteilen, verwenden Dependability Cages Qualitative Monitore 322. Während der Betriebszeit kann ein autonomes System viel mehr beobachten und in Situationen geraten, als zur Entwicklungszeit spezifiziert und entworfen wurden. Um neues Verhalten zu erkennen und von bekanntem Verhalten zu unterscheiden, verwenden Dependability Cages Quantitative Monitore 321.

Die Monitore in FIG. 3 konzentrieren sich auf zwei Themen: Der Qualitative Monitor 322 zeigt dem System ein korrektes Verhalten hinsichtlich der Zuverlässigkeitseigenschaften. Der Quantitative Monitor 321 verifiziert, dass sich das System gegenwärtig in einer bereits bekannten und getesteten Situation bzw. Umgebung befindet. Der Begriff "Monitor" ist hierin gleichbedeutend dem Begriff "Überwachungskomponente". Gegenstand der Überwachung sind die Verarbeitungsstufen 331, 332, 333 bzw. deren Zwischen- oder Endergebnisse.

Der Qualitative Monitor erfordert einen konsistenten und abstrakten Datenzugriff auf das betrachtete System mit Hilfe der Eingabe- 323 und Ausgabe-324 Abstraktionskomponenten. Eingang und Ausgang einer überwachten komplexen Funktion, z.B. Module 331, 332, und/oder 333 des autonomen Fahrsystems, werden somit abstrahiert, um eine Vielzahl von unterschiedlichen Situationen zu handhaben, wobei ein möglicher Abstraktionsansatz jener ist, die durch Sensoren beobachteten Werte in Äquivalenzklassen einzuteilen. Derartige Abstraktionen werden jeweils durch die Komponenten 323 und 324 berechnet. Sie stellen die Schnittstelle 382 zwischen dem autonomen System 330 und den beiden Monitoren 321, 322 dar. Die Abstraktionskomponenten 323, 324 greifen über definierte Schnittstellen 382, 383 auf die Daten bzw. den Datenfluss 381 innerhalb des autonomen Systems 330 zu und transformieren die Daten in abstrakte Repräsentationen. Typen und Werte der abstrakten Repräsentation werden aus einer Anforderungsspezifikation und aus Zuverlässigkeitskriterien des autonomen Systems 330 abgeleitet. Die Korrektheit und Sicherheit des autonomen Systems während des Betriebs werden durch den Qualitativen Monitor anhand dieser abstrakten Repräsentation überwacht und bewertet.

Ein Qualitativer Monitor 322 ist eine Vorrichtung, die qualitative Invarianten überwacht, nämlich Bedingungen, die ein überwachtes System permanent erfüllen muss, um als korrekt und sicher beurteilt zu werden. Der Qualitative Monitor bewertet somit die Korrektheit und Sicherheit des Systemverhaltens. Jedes beobachtete Verhalten eines Systems, das mit seinem getesteten Verhalten identisch ist, wird als sicheres und korrektes Verhalten angesehen. Zum Beispiel wird die korrekte Funktion konkreter ML-basierter Verarbeitungskomponenten 331, 332, 333 anhand deren Eingaben und Ausgaben überwacht.

Ein Qualitativer Monitor 322 umfasst eine abstrakte Funktionalität und ein Konformitätsorakel. Die abstrakte Funktionalität verarbeitet einen Satz von korrekten und sicheren Aktionen für die Funktion in der aktuellen abstrakten Situation. Das Konformitätsorakel ist eine Komponente, die die Ausgabe Abstraktion 324 mit der Menge der korrekten und sicheren abstrakten Aktionen der abstrakten Funktionalität vergleicht und mittels eines Ausgabewertes angibt, ob die vorliegende Funktionalität als sicher eingestuft wird. Der Ausgabewert kann binär sein, d.h. sicher bzw. unsicher angeben, oder beliebige Abstufung oder Wahrscheinlichkeit und weitere Informationen angeben, ob die vorliegende Funktionalität als sicher eingestuft werden kann. In FIG. 3 ist diese Ausgabe des Quantitativen Monitors als Ampel dargestellt, die symbolisiert, dass eine unsichere Funktionalität die Fehlerfall-Steuerung 325 auslöst, und eine sichere Funktionalität möglicherweise die Aufzeichnung einer neuen relevanten Situation 327 auslöst. Der Begriff Funktionalität bezieht sich hierbei zum Beispiel auf eine mögliche Steuerung des autonomen Systems in seinem gegenwärtigen Betriebszustand. Zum Beispiel könnte ein Steuersignal, das einen extremen Lenkeinschlag verursacht, bei hoher Geschwindigkeit des autonomen Systems als "nicht sicher" durch das Konformitätsorakel eingestuft werden.

Ein Quantitativer Monitor 321 überwacht einen quantitativen Bereich, d. h. die Kontexte des autonomen Systems, unter denen Aussagen über die Korrektheit und Sicherheit des Systems getroffen wurden. Jedes beobachtete Verhalten, das nicht mit dem getesteten Verhalten übereinstimmt, wird als neues Verhalten angesehen, das außerhalb eines quantitativen Bereichs autonomen des Systems liegt. Eine Kernaspekt der hierin beschriebenen Technologie liegt darin, die Funktionsweise des Quantitativen Monitors 321, der im Wesentlich auf den zuvor beschrieben Konzept der Neuheitserkennung basiert, gegenüber herkömmlichen Verfahren zu verbessern.

Der Quantitative Monitor 321 beobachtet die angetroffenen Umwelt- bzw. Umgebungssituationen, sprich Eingabe für den Quantitativen Monitor sind Sensor-Rohdaten, wie zum Beispiel Bilddaten. Für jede Situation wertet der Monitor zur Laufzeit aus, ob die angetroffene abstrakte Situation bereits aus Test bzw. Training bekannt ist. Eine Wissensbasis 326 stellt die Informationen der getesteten bzw. trainierten Situationen auf einer abstrakten Ebene zur Verfügung. Es wird eine kanonische Darstellung von abstrakten Situationen verwendet. Somit kann man diese kanonischen abstrakten Situationen als eindeutige Situationen bezeichnen.

Falls einer der Monitore ein fehlerhaftes und unsicheres Systemverhalten bzw. eine unsichere Systemsituation erfasst, müssen Sicherheitsmaßnahmen eingeleitet werden, um die entstehende Sicherheit zu verringern. Die Fehlerfall-Steuerungs- -Komponente 325, "*Fail-Operational-Reaktion*" muss das beschädigte System in einen sicheren Zustand mit akzeptablem Risiko überführen. Eine Fail-Operational-Reaktion kann zum Beispiel eine schrittweise Herabstufung, "*Graceful Degradation*", des autonomen Systems sein.

Falls einer der Monitore ein Problem anzeigt, werden die Systemdaten aufgezeichnet und später analysiert. Aufgezeichnete Daten können zurück in die Systementwicklung übertragen werden, um bisher unbekanntes fehlerhaftes Systemverhalten zu identifizieren und zu beheben und den Umfang von Systemtest und -training, um zusätzliche neuartige relevante Situationen 327 zu erweitern.

Die Auswirkungen der Analyse der aufgezeichneten Daten sind zweifacher Art: (a) abstrakte Situationen, die ein fehlerhaftes und unsicheres Systemverhalten aufweisen, weisen auf Fehler in der Spezifikation, dem Design und der Implementierung des autonomen Systems hin und (b) nicht verifizierte abstrakte Situationen weisen in erster Linie auf fehlende oder fehlerhafte Testszenarien bzw. Trainingsdaten für die Systementwicklung und -verifikation hin.

Die genannten Module des autonomen Fahrsystems 330 und des Dependability Cage 320 werden auf einer Hardware und Software Betriebsplattform 350 ausgeführt, die ein Bestandteil des autonomen Fahrsystems selbst sein kann, oder die verteilt, sprich teils im autonomen Fahrsystem und teils Cloud-basierte implementiert sein kann.

Naive-Autoencoder-basierte Erkennung von Neuheit und Relevanz

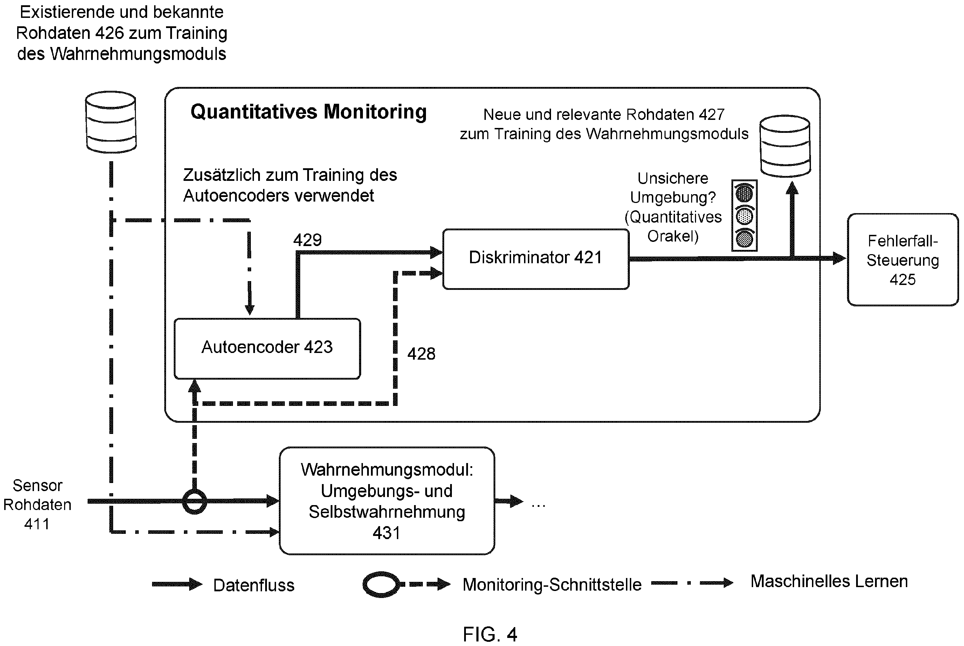

FIG. 4 zeigt Details eines Quantitativen Monitors, der auf einem Autoencoder basiert. Basierend auf einem existierenden Datenpool 426 wird der Autoencoder 423 trainiert, wobei der Autoencoder eine ML-basierte Funktion ist. Der Autoencoder 423 hat somit das "Wissen" des existierenden Datenpools 426. Kommt ein Datenstrom 424 den er kennt, dann reproduziert 425 er, im Idealfall, genau den gleichen Datenstrom. Kommt ein unbekannter Datenstrom, dann erzeugt der Autoencoder einen verfälschten Datenstrom 425. Für diesen Autoencoder eignen sich zum Beispiel Autoencoder-Netze ("Selbst"-Kodierer). Ein Autoencoder-Netz umfasst einen Encoder und einen Decoder. Der Encoder des Autoencoders verursacht eine Dimensionsreduzierung des Datenstroms und der Decoder erzeugt wieder den ursprünglichen Datenstrom. Für Datenströme, für die der Autoencoder trainiert wurde, funktioniert das im Wesentlichen verlustfrei. Werden jedoch unbekannte Datenströme in den Autoencoder eingespeist, so erzeugt er eine andere Ausgabe.

Eine Abweichung wird durch den sogenannten Diskriminator 421 erkannt und der Datenstrom kann in diesem Fall gespeichert 427 werden. Dadurch können automatisch neue und relevante, im Sinne einer substantiellen Erweiterung des bestehenden Datenpools 426, Daten erkannt werden.

Ein konventioneller Autoencoders, der hierin als "naiver Autoencoder" 423 bezeichnet wird, schneidet bei der Verwendung zur Neuheitserkennung nur bei einem, z.B. starken strukturellen Unterschied der Eingabedaten z.B. von Bildern, gut ab. Existierende und bekannte Rohdaten werden nicht nur zum Training des Wahrnehmungsmoduls 410, sondern auch zum Training des Auto-Encoders verwendet. Die Diskriminator Komponente 421 kann zum Beispiel auf Basis der Methode kleinster Fehlerquadrate feststellen, ob die Sensor-Rohdaten 424 wesentlich von der Ausgabe 429 des Auto-Encoder 423 abweichen. Wird eine starke Abweichung festgestellt, so werden Eingabedaten als neu erkannt und ggf. eine Fehlerfallsteuerung 425 aktiviert. Dennoch korreliert ein solch starker struktureller Unterschied im Eingabebild nicht notwendigerweise mit einer anderen semantischen Interpretation des Bildes. Letztere soll bei der Neuheitserkennung berücksichtigt werden, um schlussendlich, nach fortwährender Aufnahme von als neu erkannten Daten in die Trainingsdatenbasis, ausreichend repräsentative und relevante umfassende Trainingsdaten zur Verfügung zu stellen, um ein Sicherheitsargument für ML-basierte Systeme liefern zu können. Dieser und andere konventionelle Ansätze zur Neuheitserkennung berücksichtigen die semantische Interpretation der erfassten Sensordaten nicht. Neue und relevante Rohdaten 427 zum Training des Wahrnehmungsmoduls 431 werden gespeichert, um zum Beispiel bei zukünftigem Training berücksichtigt zu werden.

FIG. 5A und FIG. 5B zeigen, am Beispiel von Bilddaten, geringfügige strukturelle Unterschiede, jedoch gemäß der dargestellten Situation deutlich unterschiedlich zu bewerten sind. In konventionelle Verfahren zur Neuheitserkennung besteht beispielsweise das Risiko, dass die FIG. 5B nicht als neu erkannt wird, sofern FIG. 5A bereits Bestandteil der Trainingsdaten des Autoencoders ist. Um diesen falsch negativen Fehler bei der Neuheitserkennung, d.h. eine Situation, dass eine Eingabe als nicht neu klassifiziert wird aber tatsächlich neu ist, zu minimieren, wird die Autoencoder-basierte Neuheitserkennung gegenüber herkömmlichen Verfahren (naiver Autoencoder) in zwei Schritten verbessert.

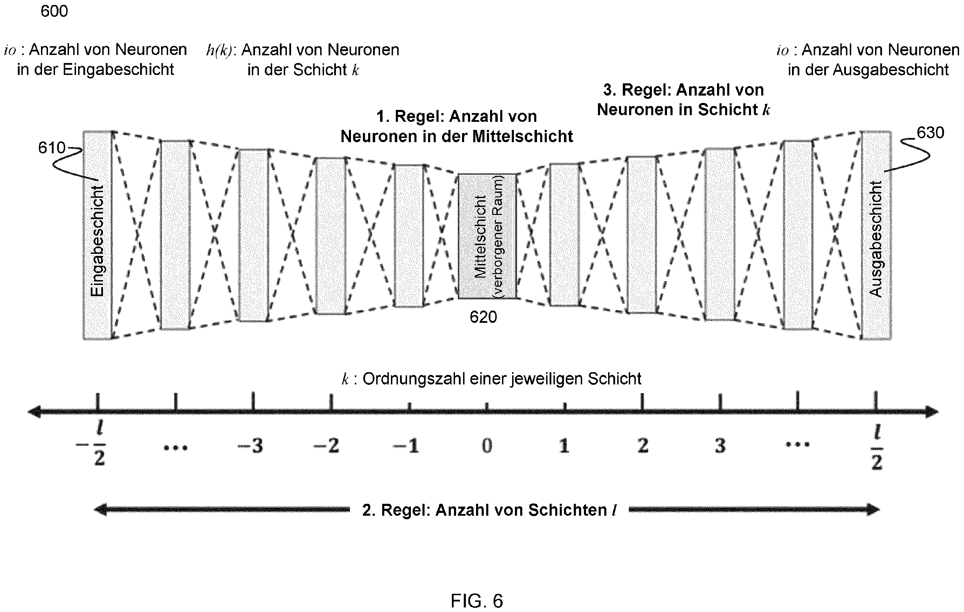

Der erste Schritt basiert auf einer semantischen Topologie, die als semantische Neuheitserkennung bezeichnet wird. Bei diesem Ansatz wurde die Semantik der Ausgabe des überwachten Systems, die ein Klassifizierungssystem ist, berücksichtigt. Hierbei wird der Autoencoder veranlasst, die Semantik in seiner Topologie zu reflektieren, indem bei der Konstruktion des Autoencoders, wie im folgenden Abschnitt "Neuheitserkennung mittels eines Semantischen-Topologiebasierten Autoencoders" beschrieben. drei Regeln angewendet werden. Dieser Ansatz wird in Zusammenhang mit FIG. 6 beschrieben. Diese Art der Neuheitserkennung wird hier auch als semi-semantische Neuheitserkennung bezeichnet. Der Schritt vom naiven Autoencoder hin zum semi-semantischen Autoencoder betrifft ausschließlich die Struktur des neuronalen Netzes des Autoencoders. Die Architektur des Dependability Cage aus FIG. 3 und die Struktur des Quantitativen Monitors, wie in FIG. 4 dargestellt, bleiben unverändert.

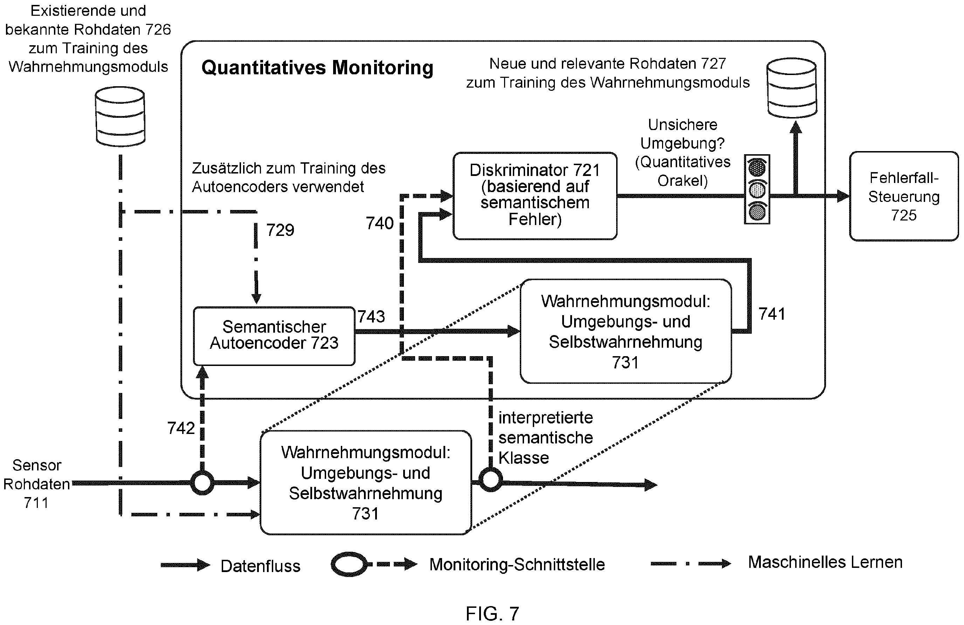

In einem zweiten Schritt, der sogenannten voll-semantischen Neuheitserkennung, wird die Topologie der semi-semantischen Neuheitserkennung wiederverwendet, aber das Neuheitserkennungskriterium wird durch einen semantischen Verlust bzw. semantischem Fehler anstelle des ursprünglichen mittleren quadratischen Fehlers (MSE) ersetzt. Dieser Ansatz wird in Zusammenhang mit FIG. 7 beschrieben. Diese Art der Neuheitserkennung wird hier auch als voll-semantische Neuheitserkennung bezeichnet.

Semi-semantische Neuheitserkennung mittels eines Semantischen-Topologiebasierten Autoencoders

In einer Ausführungsform des Quantitativen Monitors kann eine auf einem Autoencoder basierende semantische Neuheitserkennung verwendet werden, um in Echtzeit während des Systembetriebs die aktuelle Situation in (a) getestet und bekannt oder (b) neu und unbekannt zu klassifizieren. Im Falle von (b) werden die entsprechenden Rohdaten für weitere Systemverbesserungen aufgezeichnet. Ferner kann die Klassifizierung auch zu einer (a) sicheren oder (b) unsicheren Zustandsentscheidung im System und einer entsprechenden Fail-Operational-Reaktion führen.

Ein zuverlässiger Ansatz zur Neuheitserkennung sollte besser als der Ansatz des naiver Autoencoder oder einer einfachen Klassifikation sein. Eine wesentliche Beobachtung ist, dass der Grad der strukturellen Unterschiede in Eingabedaten nicht notwendigerweise mit einer unterschiedlichen semantischen Interpretation korreliert. Da letztere ein wichtiger Faktor für eine zuverlässige Neuheitserkennung sind, soll bei einer verbesserte Neuheitserkennung auch die Semantik der Ausgabe des überwachten Systems berücksichtigt werden. Ein Beispiel hierfür ist in FIG. 5A und FIG. 5B angegeben. Obgleich die beiden dargestellten Bilder strukturell im Wesentlichen ähnliche oder sogar übereinstimmende strukturelle Merkmale aufweisen, sind diese Bilder aus semantischer Hinsicht völlig, d.h. in ihrer Interpretation, völlig unterschiedlich zu beurteilen. Eine herkömmliche Neuheitserkennung, die im Wesentlichen auf strukturmerkmale anspricht, bei Kenntnis des Bildes in FIG. 5A, das Bild in FIG. 5B möglicherweise nicht als neu und für ein Training relevantes Bild einstufen. Anders, die hierin beschriebene semantische Neuheitserkennung, die diesen Unterschied erkennen kann und nicht durch gemeinsame Strukturmerkmale der beiden Bilder fehlgeleitet wird. Auch wenn das konkrete Beispiel und Ausführungen zu Sensordaten sich auf Bilddaten beziehen, werden Bilder hier nur repräsentativ zum Zwecke der Illustration verwendet und Sensordaten können sich auch auf andere Formen von Rohdaten darstellen.

FIG. 4 zeigt die Architektur mit einer auf einem Autoencoder basierten Neuheitserkennung. Der semi-semantische Autoencoder unterscheidet sich von dem naiven Autoencoder zum Beispiel darin, dass die Topologie, d.h. die Struktur des neuronalen Netzes, eine semantische Topologie ist, d.h. nach Parametern der Semantik der Ausgabe des beobachteten bzw. überwachten Systems ausgelegt wird. Mit anderen Worten, um eine zuverlässige Neuheitserkennung unter Berücksichtigung der Abhängigkeit zwischen dem Grad der strukturellen Unterschiede in den Eingabedaten und unterschiedlichen semantischen Interpretationen zu ermöglichen, wird bei der Autoencoder-basierten semantischen Neuheitserkennungsansatz die Topologie des Autoencoders aus den Parametern der Semantik der Ausgabe des überwachten Systems, insbesondere des Wahrnehmungsmoduls 431, abgeleitet. Einer der wesentlichen Designparameter des Wahrnehmungsmoduls liegt in der einer Anzahl von Klassen von Situationen, die das Wahrnehmungsmodul unterscheiden soll. Diese Anzahl von Klassen wird durch Entwickler des Wahrnehmungsmoduls 431 festgelegt mit dem Ziel jede erfasste Eingabe von Sensordaten, einer derartigen "semantischen" Klasse, z.B. einer kanonischen Situation, die im Verkehr angetroffen werden kann zuzuordnen. Die Klasse kann zum Beispiel, basierend auf einer durch die Wahrnehmungskomponente 431 erkannten Liste von Objekten festgelegt sein, wobei die Objektliste ein oder mehrere Personen, Autos, Gegenverkehr, Hindernisse, etc. und weitere Details mit deren Eigenschaften angibt. Mit anderen Worten, eine Klasse gibt eine abstrakte Situation der Umgebung des autonomen Fahrzeugs an, aus der im weiteren Verlauf der Berechnung eines Autonomen Fahrsystems 330, bzw. dessen Steuerung, durch Module zum Situationsverstehen und Aktionsentscheidung 332 und zur Spurplanung und Fahrzeugkontrolle 333 konkrete Aktuator Signale 342 abgeleitet werden. Die Definition von Klassen wird in der Regel zum Zeitpunkt der Entwicklung des Autonomen Fahrsystems bestimmt und von Systemdesignern und Sicherheitsexperten unterstützt.

Dies führt gegenüber dem Ansatz des naiven Encoders zu differenzierteren Abstraktionen, wodurch die Genauigkeit einer nachgelagerten Diskriminator-Komponente, um somit die Genauigkeit der Neuheitserkennung insgesamt, verbessert werden kann. Die Diskriminator-Komponente 421 dient als Quantitativer Monitor. Sie vergleicht die Ausgabe 429 des Autoencoders, die die rekonstruierte Eingabe 428 des Autoencoders 423 ist, mit der Eingabe der Sensor-Rohdaten 411, um einen semantischen Rekonstruktionsfehler zu berechnen. Der semantische Rekonstruktionsfehler gibt zum Beispiel eine Wahrscheinlichkeit an, dass die durch die Sensoren erfassten Sensordaten 411 außerhalb von bekannten Rohdaten 426, die zum Training und Test der Wahrnehmungskomponente 431 und auch des Autoencoders verwendet wurden, liegen.

Im Folgenden werden Architekturen bzw. spezielle Regeln zur Konstruktion der Autoencoder Komponente 423 angegeben, die dieses besonders wirksam funktionieren lassen, diesen zum semi-semantischen Autoencoder machen, und insbesondere im Kontext des Dependability Cage Ansatzes und im Vergleich zu einem naiven Autoencoder 423, deutlich bessere Erkennung von unbekannten Eingabe Daten 411 ermöglicht.

Statt oder zusätzlich zu einem semantischen Autoencoder-Netz kann ein Erzeugendes-Gegnerisches-Netzwerk (*Generative Adversarial Network, GAN*) zur Implementierung des Encoders verwendet werden. Diese haben zusätzlich die Eigenschaft auch entsprechend vergleichbare Datenströme zu erzeugen.

Die Diskriminator-Komponente 421 kann ein einfaches, Abstandsmaß zwischen den Eingaben 429 und 428 bestimmen und dann basierend auf einer definierten Schwelle entscheiden, ob eine deutliche Abweichung der Eingaben 429 und 428 vorliegt und somit eine unsichere Umgebung erkannt wurde. Der Abstand zwischen den Eingaben kann zum Beispiel eine bitweises Abstandsmaß sein, ein Abstandsmaß, das basierend auf dem Vergleich individueller Bildpunkte erfolgt, und/oder einem individuellen Vergleich von Daten aus entsprechenden Sensoren. Zusätzlich oder alternativ kann zum Beispiel ein Verfahren gemäß dem Prinzip kleinster Fehlerquadrate verwendet werden.

Da der Autoencoder 423 darauf trainiert wird, aus Training und Test bekannte Eingabedaten 426 erfolgreich zu rekonstruieren, haben bekannte Eingabedaten 426 einen signifikant geringeren Fehler als neuartige Eingabedaten. Basierend auf einem semantischen Rekonstruktionsfehler, der durch den Diskriminator 421 als Ausgabe berechnet wird, entscheidet ein Quantitatives Orakel, das in FIG, 4 als Ampel dargestellt ist, basierend auf einem Schwellwert es semantischen Rekonstruktionsfehlers, ob die Eingangssensordaten 411 bereits bekannt oder neu sind. in FIG. 4 wird dies anhand einer Ampel dargestellt. Im Falle von neuartigen Sensordaten werden neuartige und relevante Daten 427 aufgezeichnet und/oder eine Fehlerfall-Steuerungs-Reaktion 425 wird durchgeführt. In einem Fehlerfall kann das Modul 425 auf das autonome System 330 bzw. eine dessen Steuerkomponenten 333 Einfluss nehmen und zum Beispiel ein Warnsignal ausgeben, das Fahrzeug in einen bekannten, sicheren Betriebszustand zurückführen, oder auf eine nicht-autonome von einem Benutzer geführte Steuerung zurückführen.

Die Architektur eines semi-semantischen Autoencoders 423 ist derart, dass (a) der Autoencoder neuartige Eingabedaten mit einem eindeutigen, ausreichenden Rekonstruktionsfehler rekonstruiert und (b) die Differenz zwischen der ursprünglichen und der rekonstruierten Eingabe basierend auf dem resultierenden Fehler der entsprechenden Ausgabeinformationen berechnet. Im Folgenden und insbesondere im nachfolgenden Abschnitt zur Evaluation wird gezeigt, dass ein solch ausgeklügelter Autoencoder-basierter Ansatz zur semantischen Neuheitserkennung deutlich leistungsfähiger ist als bestehende "naive" Autoencoder-basierte Verfahren zur Neuheitserkennung.

Im vorliegenden Ansatz wird die Topologie eines neuronalen Netzes, das einen Autoencoder implementiert, durch Parameter des überwachten Systems gemäß bestimmten Regeln abgeleitet, die im Folgenden beschrieben werden.

Ein Autoencoder umfasst einen Encoder, der eine Eingabe komprimiert, sprich in einen niederdimensionalen Raum überführt und abbildet und abstrahiert, und einen Decoder, der die komprimierte Ausgabe des Encoders als Eingabe aufnimmt und ein ähnliches Muster der ursprünglichen Eingabe rekonstruiert. Die Parameter der Topologie des Autoencoders sind die Anzahl der versteckten Schichten und die Anzahl von Neuronen pro Schicht, insbesondere die Anzahl der Neuronen in einer mittleren Schicht, die als Schnittstelle zwischen Encoder und Decoder dient und auch als latenter Raum des Autoencoders bezeichnet wird.

FIG. 6 veranschaulicht die einzelnen Schichten bzw. die Topologie eines Autoencoders, der gemäß einer oder mehrerer der hierin beschrieben Regeln (1) bis (3) abgeleitet ist und somit vorteilhaft als Komponenten eines semantischen Autoencoders 423 eines Dependability Cage verwendet werden kann. Die sind unabhängig voneinander und können einzeln oder in Kombination angewendet werden.

Bei der Implementierung des semantischen Autoencoders 423 durch ein mehrstufiges neuronales Netz sind folgende Designparameter und folgende Regeln bei der Festlegung der Topologie des Netzes vorteilhaft.

. Die Semantik der Ausgabe des überwachten Systems, das ein Klassifikationssystem ist, umfasst verschiedenen Klassen. Um sicherzustellen, dass der Autoencoder diese Semantik in seiner Topologie widerspiegelt, ist folgende erste Regel für die Anzahl der Neuronen in der mittleren Schicht vorteilhaft:

$$(1) \qquad n \geq f \geq \lceil \log_2 n \rceil;$$

wobei *n* die Anzahl der bekannten Klassen ist und
wobei *f* die Anzahl von Neuronen in der mittleren Schicht des Netzes ist.

Durch Anwendung von Regel (1) wird der Autoencoder gezwungen, eine Abstraktion der zu identifizierenden Klassen in seiner eigenen Topologie zu finden. Dadurch wird der Autoencoder für den Fall veranlasst, dass ein Eingabedatum, zum Beispiel ein Eingangsbild, nicht zu einer der Ausgangsklassen gehört, also eine neue, zuvor nicht bekannte Eingabe vorliegt, dieses Eingabedatum mit einem deutlichen Rekonstruktionsfehler zu rekonstruieren. Die Regel (1) betrifft also eine Festlegung bezüglich der Anzahl der Neuronen in der mittleren Schicht des Netzes.

Neben der Anzahl der Neuronen in der mittleren Schicht werden zwei weitere Regeln (2) und (3) postuliert. Diese weiteren Regeln berücksichtigen auch Eingabeschicht und Ausgabeschicht. Daher wird auf jeder Seite der Ungleichung der nächsten, zweiten Regel (2), Regel der Summand 2 addiert. Die Regel betrifft die Anzahl der Schichten insgesamt:

$$(2) \quad (2 * \lceil log_2 \, n \rceil) + 1 + 2 \geq$$

$$l \geq$$

$$(2 * \lceil log_2 \, n \rceil) - 1 + 2;$$

wobei *l* die Anzahl der Schichten einschließlich der Eingabe- und der Ausgabeschicht ist.

Für die dritte Regel (3) wird jeder Schicht des Netzes eine Ordnungszahl zugewiesen, wie in FIG. 6 veranschaulicht. Die mittlere Schicht (latenter Raum) sei in diesem Fall Schicht 0. Die Ordnungszahl *k* der anderen Schicht ist der absolute Abstand zur Schicht 0. Das heißt, die nächsten inneren Schichten (links und rechts von der mittleren Schicht) haben die Ordnungszahl *k* = 1, 2 und so weiter.

$$(3) \quad h(k) :=$$

$$\begin{cases} io \text{ falls } k = \pm \left\lfloor \frac{l}{2} \right\rfloor \text{ (Eingabe- und Ausgabeschicht)} \\ h(k) \text{ gemäß Regel (1) falls } k = 0 \text{ (Mittelschicht)} \\ 2^{\lceil log_2 \, io \rceil - \sum_{i=0}^{\lfloor l/2 \rfloor - |k| - 1} i} \geq h(k) \geq 2^{\lceil log_2 \, io \rceil - \sum_{i=0}^{\lfloor l/2 \rfloor - |k| - 1} 2^i} \end{cases}$$

in allen anderen Fällen,
wobei *k* die Ordnungsnummer einer Schicht ist,
wobei *h(k)* die resultierende Anzahl von Neuronen in der Schicht *k* ist, und
wobei *io* die Anzahl der Neuronen in der Eingabe- oder Ausgabeschicht ist.

Durch die Anwendung der Regeln (2) und (3) wird der Autoencoder veranlasst, eine exponentielle Packung der relevanten Merkmale für die Semantik der Ausgabe des überwachten Systems zu zeigen. Mit anderen Worten wird der Autoencoder während des Trainings dazu veranlasst, sich schnell auf die relevanten semantischen Merkmale zu konzentrieren. Dies hat den Vorteil, dass das Training des Autoencoders effizient ablaufen kann und rasch konvergiert.

Auswertung der semi-semantischen Neuheitserkennung

Um die Ergebnisse der semi-semantischen Neuheitserkennung mittels eines auf einer semantischen Topologie basierenden Autoencoders mit dem "naiven" Autoencoder-basierten Ansatz zu vergleichen, wird im Folgenden der MNIST-Datensatz verwendet.

Der Erfolg eines konventionellen Autoencoders, hierin auch als "naiver Autoencoder" bezeichnet, bei der Neuheitserkennung, z. B. nach C. Richter, N. Roy, "Safe Visual Navigation via Deep Learning and Novelty Detection" Robotics: Science and Systems Foundation, Massachusetts Institute of Technology, 2017, hängt im Wesentlichen von großen strukturellen Unterschieden in den Eingabedaten ab: Im Fall des MNIST-Datensatzes, der im Folgenden zur Evaluation herangezogen wird, sind Eingabedaten zum Beispiel Bilder von Ziffern und Buchstaben. Um die Vorteile eines semantischen Autoencoders zu zeigen wurde ein Experiment basierend auf dem MNIST Datensatz durchgeführt, das Ziffern von Buchstaben unterscheidet, Das Experiment wurde dahingehend modifiziert, dass zufällig einige Klassen von Ziffern aus der Trainingsmenge des Autoencoders ausgeschlossen wurden, um herauszufinden, ob ein auf dieser Basis trainierter Autoencoder die unbekannten, sprich nicht im Training gesehen Ziffern, immer noch als neuartig erkennen kann. Die Überlegung hierbei ist, dass Ziffern untereinander als strukturell ähnlich gegenüber Buchstaben gelten. Daher wird im Folgenden einen leicht modifizierten Datensatz verwendet, der nur sieben Ziffernklassen für das Training enthält und die anderen drei Ziffernklassen sowie neun Buchstabenklassen als neue Daten beibehält.

Es kann erwartet werden, dass ein naiver Autoencoder unter diesen Trainingsbedingungen versagt, sobald neue Daten gegenüber Trainingsdaten einen kleine Strukturunterschied aufweisen, aber ein großer semantischer Unterschied haben. Versagen bedeutet hierbei, dass derartige Daten fälschlicherweise als bekannt anstatt richtigerweise als neu erkannt werden. Eine derartiger Autoencoder weist somit eine hohe Falsch-Negativ-Rate auf, was zu vermeiden ist. Im Folgenden wir ein Autoencoder nach Richter et al. als Referenz genommen und als "naive" Autoencoder-basierte Neuheitserkennung bezeichnet. Das Scheitern hinsichtlich der falsch-negativen Fehler wird anhand eines normalen neuronalen Klassifizierungsnetzes aufgezeigt und mit einem semantischen Autoencoder verglichen.

Zum Beispiel kann der Autoencoder für die Auswertung von Bildern des MNIST-Digitaldatensatzes mit Hilfe eines Feed-Forward-Autoencoders für Bilder mit drei oder mehr verborgenen Sigmoid-Schichten, etwa 50 Knoten in jeder Schicht und zusätzlicher Sigmoid-Eingangs- und Ausgangsschicht mit jeweils etwa 784 Knoten, abhängig von der Bildgröße in Pixeln, implementiert werden. Der Autoencoder kann einen stochastischen Mini-Batch-Gradienten-Abstieg (Adam-Optimierer) verwenden, um Bilder zu rekonstruieren, indem die quadratische pixelweise Differenz zwischen Eingang und rekonstruierter Ausgabe minimiert wird.

Die Leistungsfähigkeit von Autoencodern wurde wie folgt evaluiert: Das Training erfolgte auf Basis von Zifferndarstellungen aus dem MNIST Datensatzes, wobei, wie beschrieben, einige Klassen von Ziffern von Training ausgeschlossen werden. Diese ausgeschlossenen Klassen von Ziffern (drei der zehn Ziffern), sollten idealerweise durch den trainierten Autoencoder zuverlässig als "neue" Daten erkannt werden. Buchstaben wurde nicht trainiert und sollten somit ebenfalls zuverlässig als neu erkannt werden.

Der naive Autoencoder erkennt trainierte Klassen von Buchstaben und Ziffern zuverlässig, d.h. 100 % der Ziffern in zuvor trainierten Klassen werden zuverlässig erkannt als nicht neu erkannt und 100% der Buchstaben werden zuverlässig als neu klassifiziert. Aufgrund der der strukturellen Ähnlichkeit der nicht-trainierten Ziffernklassen mit trainierten Ziffernklassen, werden jedoch 83% von Ziffern in nicht-trainierte Ziffernklassen als "nicht neu" und somit falsch klassifiziert (hohe Falsch-Negativ Rate).

Bei einem semi-semantische Autoencoder, der als neuronales Netz implementiert ist und dessen Topologie bzw. Netzstruktur nach der zuvor genannten Regel (1) ausgelegt ist, d.h. dessen Anzahl von Neuronen in der mittleren Schicht gemäß der Anzahl bekannte Klassen ausgelegt ist (im Experiment 7 Klassen unterschiedliche Ziffern), werden lediglich 57 % von Ziffern in nicht-trainierten Ziffernklassen als "nicht neu" und somit falsch klassifiziert (mittlere Falsch-Negativ Rate). Eine Beispiel Topologie des Autoencoders waren 784-50-7-50-784 Neuronen, die drei versteckten Sigmoid-Schichten hatten nacheinander 50, 7 und 50 Neuronen auf jeder Schicht, und die Eingangs- und Ausgangsschicht hatte 784 Neuronen, aufgrund der Bildgröße.

Bei einem semantischer Autoencoder, der als neuronales Netz implementiert ist und dessen Topologie bzw. Netzstruktur nach allen zuvor genannten Regeln (1) bis (3) ausgelegt ist, werden lediglich 8 % von Ziffern in nicht-trainierten Ziffernklassen als "nicht neu" und somit falsch klassifiziert (niedrige Falsch-Negativ Rate). Ein Beispiel für eine derartige Topologie eines Autoencoder mit fünf versteckten Schichten hatte jeweils 512, 128, 7, 128, 512 Neuronen in fünf Schichten.

Voll-semantische Neuheitserkennung

FIG. 7 zeigt eine Variante der Architektur aus FIG. 4. Zur Anwendung kommt hierbei eine im Vergleich zur semi-semantischen Neuheitserkennung in FIG. 4 eine alternative Diskriminator-Komponente.

Im Vergleich zur semi-semantischen Neuheitserkennung bleibt die Komponente Autoencoder mit semantischer Topologie, kurz semantischer Autoencoder 723, gleich zuvor für den Fall der semi-semantischen Neuheitserkennung beschrieben. Die Ausgabe des Autoencoders 723, sprich die rekonstruierten 743 Sensor-Rohdaten 742, wird an die Umgebungs- und Selbstwahrnehmungskomponente 731 mit dem identischen Interpretationsmechanismus weitergeleitet, die als Wahrnehmungsteil 731 des überwachten autonomen Systems fungiert und ihre eigenen interpretierten semantischen Klassen als Ausgabe 740, 741 liefert.

Die Ausgabe der ursprünglichen Wahrnehmungskomponente 731 des autonomen Systems enthält neben den Sensor-Rohdaten auch interpretierte semantische Klassen 740, wie z. B. die Objektliste im Fall des autonomen Fahrsystems des Fahrzeugs. Diese semantischen Klassen werden als Eingaben der Diskriminator Komponente 721 im Quantitativen Monitor verwendet. Der Diskriminator erkennt neuartige Eingaben, indem er die beiden identifizierten semantischen Klassen 740, 741 vergleicht, die von den Komponenten Umgebungs- bzw. Selbstwahrnehmung 731 im autonomen System und dem quantitativen Monitor (identische Komponente zu 731 durch gestrichelte Linien in FIG 7 angezeigt), geliefert werden.

In einem Quantitativen Monitor mit voll-semantische Neuheitserkennung wird also die eigentliche, zu überwachende ML-Verarbeitungsfunktion 731, sowohl auf den Datenstrom erfasster Sensor-Rohdaten 711, als auch auf den Datenstrom 743 aus dem semantischen Autoencoder 723 angewendet. Die Komponente des semantischen Autoencoders ist identisch mit der des semi-semantischen Autoencoders, der zuvor beschrieben wurde. Der wesentliche Unterschied gegenüber der Architektur mit dem semi-semantischen Autoencoders 423 auf FIG. 4 liegt in der Funktionsweise und den Eingaben des Diskriminators 721. Der Vergleich dieses semantischen Diskriminators findet nicht auf Sensor-Rohdaten bzw. einer durch den Autoencoder berechneten Version der Rohdaten statt (wie in den Ausführungsformen von FIG. 3 und FIG. 4), sondern auf den Ausgaben 740 und 741 der zuvor beschriebenen zweifachen Anwendung der Wahrnehmungskomponente 731. Die Eingaben des Diskriminators ist somit jeweils semantische Klassen basierend auf dem durch die Wahrnehmungskomponente erzeugten Objektliste. Eine unterschiedliche Anzahl von Objekten in den Objektlisten der Eingabe 740 und 741 ist für den Diskriminator 721 ein sicherer Anhaltspunkt, für eine unterschiedliche semantische Einstufung und somit insgesamt unterschiedliche semantische Klassen und somit eine unsichere Umgebung, d.h. aktuell erfasste Sensordaten entsprechen mit hoher Wahrscheinlichkeit keiner Situation, für die das Wahrnehmungsmodul 731 zuvor trainiert wurde. Die Auslegung der Klassen und die Klassifizierung findet für einzelne Objekte in der Objektliste statt. Die Klassifizierung einer Liste von Objekten führt wiederum zu einer Gesamtklassifizierung der Umgebung.

Um den Begriff der Objektliste zu veranschaulichen, zeigen FIG. 5A und FIG. 5B Szenarien mit einer gleichen Anzahl von Objekten in einer Objektliste. Beide Situationen sind jedoch, wie zuvor erläutert, unbedingt zu unterscheiden, sprich die Attribute einzelner Objekte in der Objektliste unterscheiden sich derart, dass eine Zuordnung in unterschiedliche semantische Klassen erfolgt. Diese Attribute betreffen zum Beispiel, die Geschwindigkeit, Distanz, und Bewegungsrichtung einzelner Objekte. Die Objektliste in FIG 5A und FIG. 5B umfasst zum Beispiel eine Auto und zwei Fußgänger. Die Klassifizierung der Fußgänger weicht in FIG 5A von der Klassifizierung der Fußgänger in FIG. 5B ab, insofern, als die Richtung und Bewegung der Fußgänger sich in FIG. 5A und FIG 5B unterscheidet. Dieses "Wissen" bezüglich der Zuordnung, ist im Design der Wahrnehmungskomponente 431, 731 enthalten und von Designern des autonomen Fahrsystems optimiert. Die Gesamtklassifizierung und semantische Bewertung der Umgebung in FIG. 5A is daher eine andere, als diejenige in FIG. 5B. Die hierin beschriebene Technologie der Überwachungskomponente in Gestalt eines Quantitativen Monitors "profitiert" von diesem "Wissen" bzw. dem Design des Wahrnehmungsmoduls 431, 731 insofern, als semantische Unterschiede bei der Bewertung der Neuheit einbezogen werden. Im Falle des semi-semantischen Neuheitserkennung waren dies Parameter bei der Bemessung der Topologie des Autoencoders gemäß FIG. 6, die sich an einer Anzahl semantischer Klassen orientierten. Beim der hier beschriebenen voll-semantischen Neuheitserkennung wird zudem die Fähigkeit der semantischen Bewertung einer Situation durch das Wahrnehmungsmoduls 731 für die Neuheitserkennung ausgenutzt.

FIG. 4 bzw. FIG. 7 zeigen an, dass existierende und bekannte Rohdaten 426, 726 sowohl zum Training des Wahrnehmungsmoduls 431, 731, als auch zum Training des semantischen Autoencoders 423, 723 verwendet werden. Hierbei ist zu erwähnen, dass für das Training des Autoencoders keine "Labels" an den Trainingsdaten erforderlich sind. Dies ist möglicherweise anders, beim Training der Wahrnehmungskomponente 431, 731, wo entsprechende Labels durch Systementwickler und Sicherheitsexperten vergeben werden und "semantische" Information enthalten, wie zum Beispiel eine Klassifizierung der Gesamtsituation, oder einer Klassifizierung einzelner Objekte in der Umgebung, wodurch die Situation, die FIG. 5A gezeigt ist, sich deutlich von der Situation in FIG. 5B unterscheiden lässt. Der Umstand, dass die Trainingsdaten für die ML-Komponente des Autoencoders keiner Labels bedürfen vereinfacht die Handhabung und das Training des Autoencoders.

Die Zuordnung zu semantischen Klassen kann eindeutig sein oder kann auch als Vektor von Wahrscheinlichkeiten angegeben sein, wobei der Vektor an jeder Stelle eine Wahrscheinlichkeit zur Zugehörigkeit in der jeweiligen semantische Klasse angibt, die der Position im Vektor entspricht. Basierend auf einem derartigen Vektor kann in bestimmten Fällen basierend auf einem Schwellwert eine eindeutige Klasse anzeigen, die durch den Vektor als wahrscheinlichste Klasse angegeben wird. Der Verglich der semantischen Klassen bzw. des Vektors, der die semantischen Klassen nach Wahrscheinlichkeit angibt, kann zum Beispiel binär erfolgen, sprich wenn die Klassen 740 und 741 sich unterscheiden, erkennt der Diskriminator 721 sofort einen semantischen Fehler bzw. eine semantische Abweichung und signalisiert an seiner Ausgabe, dass eine "unsichere" Umgebung vorliegt, sprich die aktuell erfasste Sensordaten mit hoher Wahrscheinlichkeit keiner Situation entsprechen, für die das Wahrnehmungsmodul 731 zuvor trainiert wurde. Alternativ, kann der Diskriminator 721 basierend auf semantische Klassen oder auf den besagten Vektoren von Wahrscheinlichkeiten eine Abstandsmaß bestimmen und dann basierend auf einem Schwellwert entscheiden, ob eine unsichere Umgebung vorliegt oder nicht. Das Abstandsmaß kann eine Metrik basierend auf den Wahrscheinlichkeitsvektoren sein, und/oder aufgrund Systemdesignern und Sicherheitsexperten vorgegebener Heuristiken basieren.

Durch diese Art des Datenflusses wird der semantische Gehalt der Eingaben des Diskriminators 721 deutlich erhöht, wodurch die Funktionsweise des Diskriminators präziser werden kann. Auf dieser Basis kann der Diskriminator 721 auch eine semantisch fundierte Entscheidung bzgl. der Neuheit und Relevanz des aktuellen Datenstromes im Hinblick auf eine substantielle Erweiterung 727 des bestehenden Datenpools 726 treffen. Mit anderen Worten: In dieser Architektur werden nicht die Eingabe Sensor-Rohdaten 742, erhalten über den semantischen Autoencoder 723, sondern die Ausgabedaten 741, 740 des überwachten, in Betracht gezogen Systems, wie zum Beispiel das in FIG. 7 gezeigte Umgebungs- und Selbst-Wahrnehmungsmodul 731, verwendet, um den semantischen Diskriminator 721 zu speisen, um neue und relevanter Datensätze, die für ein zukünftiges Training des der ML-Komponente 731 relevant sind, zu erkennen und erfassen, und somit letztendlich auch den Autoencoder 723 zur Neuheitserkennung weiter anzuleiten, anzulernen, bzw. zu vervollständigen.

Der hierin beschriebene Quantitative Monitor aus FIG. 7 basiert auf einem voll-semantischen Ansatz und hat somit eine Neuheitserkennung auf zwei verschiedenen Ebenen: Zunächst klassifiziert die Komponente Umgebungs- und Selbstwahrnehmung 731 rekonstruierte Rohdaten mit Hilfe der trainierten Interpretationsfunktion auf Basis von Trainingsdaten 726. Diese Klassifizierung wird auf der Datenebene abgeschlossen, wie der Diskriminator in anderen Ansätzen, die auf der Unterscheidung basierend zum Beispiel auf mittleren Fehlerquadraten, MSE, basieren. Zweitens werden beide Sätze von interpretierten semantischen Klassen 740, und 741 innerhalb der Diskriminator Komponente 721 basierend auf einem semantischen Fehler verglichen, wobei die Datenklassifikation auf der semantischen Ebene durchgeführt wird. So können die falsch negativen Fehler aufgrund ähnlich strukturierter, aber semantisch unterschiedlicher neuartiger Daten, wie am Beispiel von FIG. 5A und FUG 5B gezeigt, minimiert werden.

Auswertung der voll-semantischen Neuheitserkennung

Bei einem voll semantische Neuheitserkennung, die auf dem zuvor beschriebenen semi-semantischen Autoencoder basiert, jedoch einen semantischen Diskriminator 721 umfasst, wird keine, sprich 0 %, von Ziffern in nicht-trainierten Ziffernklassen als "nicht neu" und somit falsch klassifiziert (niedrige Falsch-Negativ Rate). Ein geringer Anteil von bekannten, trainierten Ziffern, wird als neu bewertet was als erhöhte Falsch-Positive Meldung angesehen werden kann. Im Kontext der Neuheitserkennung und dem Zuverlässigkeitskäfig ist dieser Effekt allenfalls als mögliche Ineffizienz zu bewerten, nicht jedoch als ein Verlust an Sicherheit in der Erkennung möglicher neuer Sensor-Rohdaten. Durch die dramatische Reduktion der Falsch-Negativ Rate, wird die Sicherheit der Überwachung der zugrundeliegenden ML-Funktion gegenüber einem herkömmlichen Ansatz von Neuheitserkennung, z. B. basierend auf einem naiven Autoencoder, und auch gegenüber dem Ansatz der ausschließlich auf dem semi-semantischen Autoencoder basiert, dramatisch verbessert.

Weitere Implementierungen

In Beispielimplementierungen der hierin beschriebenen Technologie kann ein Computergerät eine beliebige Anzahl von Hardware- und/oder Softwareanwendungen enthalten. In Beispielimplementierungen können eine oder mehrere I/O-Schnittstellen die Kommunikation zwischen dem Computergerät und einem oder mehreren I/O-Geräten ermöglichen. Eine oder mehrere Netzwerkschnittstellen können die Verbindung der Eingänge und Ausgänge des Computergeräts mit einem oder mehreren geeigneten Netzwerke und/oder Verbindungen erleichtern; z. B. die Verbindungen, die die Kommunikation mit einer beliebigen Anzahl von Sensoren ermöglichen, die dem System zugeordnet sind. Die eine oder mehreren Netzwerkschnittstellen können ferner die Verbindung mit einem oder mehreren geeigneten Netzwerken erleichtern; zum Beispiel ein lokales Netzwerk, ein Weitverkehrsnetzwerk, das Internet, ein zelluläres Netzwerk, ein Funkfrequenznetzwerk, ein Bluetooth-fähiges Netzwerk, ein WiFi-fähiges Netzwerk, ein satellitengestütztes Netzwerk, ein beliebiges kabelgebundenes Netzwerk, ein beliebiges drahtloses Netzwerk usw. zur Kommunikation mit externen Geräten und/oder Systemen.

In der vorliegenden Beschreibung werden zahlreiche spezifische Details dargelegt. Es versteht sich jedoch, dass Ausführungsformen der offengelegten Technologie auch ohne diese spezifischen Details praktiziert werden können. In anderen Fällen wurden bekannte Verfahren, Strukturen und Techniken nicht im Detail dargestellt, um das Verständnis dieser Beschreibung nicht zu beeinträchtigen. Verweise auf "eine Ausführungsform", "Beispielausführungsform", "einige Ausführungsformen", "bestimmte Ausführungsformen", "verschiedene Ausführungsformen" usw. weisen darauf hin, dass die so beschriebene(n) Ausführungsform(en) der offengelegten Technologie ein bestimmtes Merkmal, eine bestimmte Struktur oder eine bestimmte Eigenschaft enthalten kann (können), aber nicht jede Ausführungsform notwendigerweise das bestimmte Merkmal, die bestimmte Struktur oder die bestimmte Eigenschaft enthält. Ferner bezieht sich die wiederholte Verwendung des Ausdrucks "in einer Ausführungsform" nicht notwendigerweise auf dieselbe Ausführungsform, obwohl dies der Fall sein kann.

Bei der Beschreibung von Ausführungsbeispielen werden bestimmte Begriffe der Klarheit halber verwendet. Es ist beabsichtigt, dass jeder Begriff seine weiteste Bedeutung hat, wie sie von Fachleuten verstanden wird, und alle technischen Äquivalente einschließt, die in ähnlicher Weise arbeiten, um einen ähnlichen Zweck zu erreichen.

Während bestimmte Ausführungsformen hierin beschrieben wurden, ist die vorliegende Technologie nicht auf die offengelegten Beispielausführungen beschränkt, sondern umfasst verschiedene Modifikationen und gleichwertige Anordnungen. Obwohl hier spezifische Begriffe verwendet werden, werden sie nur in einem generischen und beschreibenden Sinne und nicht zum Zwecke der Einschränkung verwendet.

**Patentansprüche**

1. Computerimplementiertes Verfahren (800) für ML-basierte Datenauswertung (110), umfassend folgende Schritte:

Empfangen (810) eines Stroms von Sensordaten (160);
Codieren (820) der Sensordaten über einen Encoder (120);
Bestimmen (830), durch einen Diskriminator (130) und basierend auf den codierten Sensordaten, ob die Sensordaten relevante Ergänzungen (150) einer Menge von Trainingsdaten (140) sind.

**2.** Computerimplementiertes Verfahren nach Anspruch 1, wobei das Verfahren zur kontinuierlichen Vervollständigung der Menge von Trainingsdaten (140) verwendet wird, ferner umfassend den Schritt:
basierend auf der Bestimmung, dass die Sensordaten eine relevante Ergänzung sind, Hinzufügen (840) der Sensordaten zu der Menge von Trainingsdaten (140).

**3.** Computerimplementiertes Verfahren nach Anspruch 1 oder 2, wobei das Verfahren zur Überwachung einer ML-basierten Steuerung eines autonomen Systems verwendet wird, ferner umfassend den Schritt:
basierend auf der Bestimmung, durch den Diskriminator (130), dass die Sensordaten eine relevante Ergänzung sind, Ausgeben (850), durch den Diskriminator (130), eines Steuersignals zur Überführung des autonomen Systems in einen Fail-Safe-Modus.

**4.** Computerimplementiertes Verfahren nach einem der Ansprüche 1 bis 3,
wobei der Encoder (120) ein semantischer Autoencoder (423) oder ein Generative Adversarial Network ist, und
wobei der Encoder (120) basierend auf der Menge von Trainingsdaten (140) trainiert wird.

**5.** Computerimplementiertes Verfahren nach Anspruch 4, wobei der semantische Autoencoder (120, 423) auf einem neuronalen Netz (600) basiert, dessen Topologie einer oder mehreren von folgenden Regeln genügt:

a)

$$n \geq f \geq \lceil \log_2 n \rceil ;$$

wobei n eine Anzahl vorbestimmter semantischer Klassen einer Umgebungswahrnehmung der ML-basierten Steuerung des autonomen Systems (180) ist und
wobei $f$ eine Anzahl von Neuronen in einer mittleren Schicht (620) des Netzes ist;
b)

$$(2 * \lceil log_2 n \rceil) + 1 + 2 \geq l \geq (2 * \lceil log_2 n \rceil) - 1 + 2;$$

wobei $l$ eine Anzahl von Schichten des neuronalen Netzes ist einschließlich einer Eingabe- (610) und einer Ausgabeschicht (630); und
c)

$$h(k) :=$$

$$\begin{cases} io \text{ falls } k = \pm \left\lfloor \frac{l}{2} \right\rfloor \\ h(k) \text{ gemäß Regel a) falls } k = 0 \\ 2^{\lceil \log_2 io \rceil - \sum_{i=0}^{\lfloor l/2 \rfloor - |k| - 1} i} \geq h(k) \geq 2^{\lceil \log_2 io \rceil - \sum_{i=0}^{\lfloor l/2 \rfloor - |k| - 1} 2^i} \end{cases}$$

sonst,
wobei $k$ eine Ordnungsnummer einer Schicht des neuronalen Netzes ist,
wobei $h(k)$ eine resultierende Anzahl von Neuronen in der Schicht $k$ ist, und
wobei $io$ eine Anzahl von Neuronen in der Eingabe- (610) oder Ausgabeschicht (630) ist.

**6.** Computerimplementiertes Verfahren (800) für ML-basierte Datenauswertung umfassend folgende Schritte:

Empfangen (810) eines Stroms von Sensordaten (160, 711);
Codieren (820) der Sensordaten über einen semantischen Autoencoder (120, 723);
Verarbeiten sowohl der originalen Sensordaten (742), wie auch der durch semantischen Autoencoder (120, 723) codierten Sensordaten (743), durch eine ML-basierte Komponente (110, 731);
Bestimmen, durch einen Diskriminator (130, 721) auf Basis der verarbeiteten originalen Sensordaten (741) und der verarbeiteten durch den semantischen Autoencoder (120, 723) codierten Sensordaten (740), ob die originalen Sensordaten (711) relevante Ergänzungen (150, 727) einer Menge von Trainingsdaten (140, 726) sind; basierend auf der Bestimmung durch den Diskriminator (130, 721), dass die originalen Sensordaten (742) eine relevante Ergänzung (150, 727) der Menge von Trainingsdaten (140, 726) sind, Hinzufügen (840) der originalen Sensordaten (742) zu der Menge von Trainingsdaten (140).

7. Vorrichtung (100) zur ML-basierten Steuerung eines autonomen Systems (180) umfassend:

einen Speicher (140), der zur Speicherung von Trainingsdaten ausgelegt ist;
einer ML-Komponente (110), die dazu ausgelegt ist, Sensordaten (160) zu empfangen und Signale (170) zur Steuerung eines autonomen Systems (180) auszugeben;
eine Überwachungskomponente (190) zur Überwachung der ML-Komponente (110), umfassend einen Encoder (120) und einen Diskriminator (130), wobei die Überwachungskomponente dazu ausgelegt ist, das Verfahren nach einem der Ansprüche 1 bis 6 durchzuführen.

8. Vorrichtung (190) zur Überwachung einer ML-basierten Steuerung (110) eines autonomen Systems (180) gemäß dem Verfahren nach einem Ansprüche 1 bis 6 umfassend:

einen Encoder (120); und
einen Diskriminator (130).

FIG. 1

Zuverlässigkeitskäfig (Dependability Cage) 200

Schnittstellen 290 zum autonomen System und erfassten Sensordaten

Neue und relevante Grundwahrheitsdaten der Umgebung 210

Neue und relevante Grundwahrheitsdaten zum Zustand des autonomen Systems 220

Unsichere Funktionsweise? Qualitatives Orakel 230

Unsicher Umgebung? Quantitative Orakel 240

Orakel 250

Funktions-Monitor 260

Validitäts-Monitor 270

Situations-Monitor 280

FIG. 2

EP 3 961 511 A1

## Kontinuierliche Monitoring Achitektur nach dem Dependability Cage Ansatz 320

**Fahrzeug Sensor Plattform 310**

**Fahrzeug Aktuator Plattform 340**

Bekannte Situationen 326

Neue relevante Situationen 327

Quantitativer Monitor 321

Unsichere Umgebung? (Quantitatives Orakel)

Eingabe Abstraktion 323

Qualitativer Monitor 322

Unsichere Funktionalität? (Qualitatives Orakel)

Ausgabe Abstraktion 324

Fehlerfall-Steuerung 325

**Autonomes Fahrsystem 330**

Sensor Rohdaten 311

Wahrnehmungsmodul: Umgebungs- und Selbstwahrnehmung 331

Situationsverstehen und Aktionsentscheidung 332

Spurplanung und Fahrzeugkontrolle 333

Aktuator Signal 342

## Hardware und Software Betriebsplattform 350
(Middleware, Operating System, Communication Network, Execution Hardware)

→ Datenfluss 381      ⊶→ Monitoring-Schnittstelle 382      ⋯⋗ Konfigurationsschnittstelle 383

FIG. 3

FIG. 4

FIG. 5B

FIG. 5A

600

*io* : Anzahl von Neuronen
in der Eingabeschicht

*h(k)*: Anzahl von Neuronen
in der Schicht *k*

*io* : Anzahl von Neuronen
in der Ausgabeschicht

**3. Regel: Anzahl von
Neuronen in Schicht *k***

**1. Regel: Anzahl von
Neuronen in der Mittelschicht**

610

630

Eingabeschicht

Mittelschicht
(verborgener Raum)

Ausgabeschicht

620

*k* : Ordnungszahl einer jeweiligen Schicht

$$-\frac{l}{2} \quad \cdots \quad -3 \quad -2 \quad -1 \quad 0 \quad 1 \quad 2 \quad 3 \quad \cdots \quad \frac{l}{2}$$

**2. Regel: Anzahl von Schichten *l***

FIG. 6

EP 3 961 511 A1

FIG. 7

800

Empfangen eines Stroms von Sensordaten 810

Codieren der Sensordaten über einen Encoder 820

Bestimmen ob die Sensordaten relevante Ergänzungen einer Menge von Trainingsdaten sind 830

NEIN

JA

Optional: Hinzufügen der Sensordaten zu der Menge von Trainingsdaten 840

Optional: Ausgeben eines Steuersignals zur Überführung des autonomen Systems in einen Fail-Safe-Modus 850

FIG. 8

Europäisches Patentamt
European Patent Office
Office européen des brevets

# EUROPÄISCHER RECHERCHENBERICHT

Nummer der Anmeldung

**EP 21 18 1014**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Stecco Andrea: "Misbehaviour prediction for autonomous driving systems", , 10. Oktober 2019 (2019-10-10), Seiten 1-12, XP055870268, arXiv.org Gefunden im Internet: URL:https://arxiv.org/pdf/1910.04443 [gefunden am 2021-12-07] * Zusammenfassung * * Seite 2, linke Spalte * * Abbildung 4 * * Abschnitt 4 * ----- | 1-8 | INV. G06N3/04 G06N3/08 B60W50/04 B60W60/00 |
| X | AMINI ALEXANDER ET AL: "Variational Autoencoder for End-to-End Control of Autonomous Driving with Novelty Detection and Training De-biasing", 2018 IEEE/RSJ INTERNATIONAL CONFERENCE ON INTELLIGENT ROBOTS AND SYSTEMS (IROS), IEEE, 1. Oktober 2018 (2018-10-01), Seiten 568-575, XP033491655, DOI: 10.1109/IROS.2018.8594386 [gefunden am 2018-12-27] * Abbildungen 1, 2, 8 * * Abschnitte III und V.C * ----- | 1,2,4-8 | RECHERCHIERTE SACHGEBIETE (IPC) G06N B60W |

Der vorliegende Recherchenbericht wurde für alle Patentansprüche erstellt

| Recherchenort | Abschlußdatum der Recherche | Prüfer |
|---|---|---|
| **Den Haag** | **8. Dezember 2021** | **Theissing, Simon** |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Safe Visual Navigation via Deep Learning and Novelty Detection. **C. RICHTER ; N. ROY.** Robotics: Science and Systems Foundation. Massachusetts Institute of Technology, 2017